# EUROPEAN PATENT APPLICATION

(11) **EP 4 529 053 A1**
(43) Date of publication of application: **26.03.2025**
(21) Application number: 23859154.9
(22) Date of filing: 16.08.2023
(51) Int. Cl.: H04J 3/06, G10L 15/22

(54) **COMMUNICATION APPARATUS, AND COMMUNICATION SYNCHRONIZATION METHOD AND SYSTEM**

(30) Priority: 02.09.2022 CN 202211075062; 23.11.2022 CN 202211471319
(71) Applicant: Huawei Technologies Co., Ltd., Shenzhen, Guangdong 518129 (CN)
(72) Inventor: LI, Xin, Shenzhen, Guangdong 518129 (CN); YANG, Meiwen, Shenzhen, Guangdong 518129 (CN); GONG, Shuqiang, Shenzhen, Guangdong 518129 (CN); MAI, Ruikai, Shenzhen, Guangdong 518129 (CN); ZHANG, Jiacong, Shenzhen, Guangdong 518129 (CN)
(74) Representative: MERH-IP Matias Erny Reichl Hoffmann Patentanwälte PartG mbB
(86) International application number: PCT/CN2023/113240
(87) International publication number: WO 2024/046120

(57) **Abstract**

A communication apparatus, a synchronization method, and a system are provided. The communication apparatus includes a wireless communication unit, a clock circuit, and a control module. When an electronic device in which the communication apparatus is located is a primary device, the wireless communication unit is configured to send a signal used for synchronization of a communication clock signal. When an electronic device in which the communication apparatus is located is a secondary device, the wireless communication unit is configured to receive the signal that is used for synchronization of a communication clock signal and that is sent by the primary device. The clock circuit may generate a data processing clock signal based on the communication clock signal. The control module may perform data processing and/or control a data output based on the data processing clock signal. A communication clock signal of the primary device is synchronized with a communication clock signal of the secondary device, and the communication clock signal of the secondary device is obtained based on the received signal used for synchronization of a communication clock signal.

## Description

### CROSS-REFERENCE TO RELATED APPLICATIONS

This application claims priority to Chinese Patent Application No. 202211075062.X, filed with the China National Intellectual Property Administration on September 2, 2022 and entitled "AUDIO SYNCHRONIZATION METHOD AND APPARATUS AND SYSTEM", which is incorporated herein by reference in its entirety; and claims priority to Chinese Patent Application No. 202211471319.3, filed with the China National Intellectual Property Administration on November 23, 2022 and entitled "COMMUNICATION APPARATUS, SYNCHRONIZATION METHOD, AND SYSTEM", which is incorporated herein by reference in its entirety.

### TECHNICAL FIELD

This application relates to the field of communication technologies, and in particular, to a communication apparatus, a synchronization method, and a system.

### BACKGROUND

An audio and video playing device (like a smart television or tablet computer) and an audio playing device (like a smart speaker) may be connected to an external audio device (like a wireless speaker) through a wireless technology like Bluetooth, Wi-Fi (a wireless local area network technology in the IEEE 802.11 standard), or WiSA (WiSA is short for Wireless Speaker and Audio Association, represents a hardware and software standard, and is used to wirelessly transmit a high-resolution digital audio from one source device to up to eight channels), to implement a multi-channel stereo scenario through combination. Because an audio channel bandwidth of Bluetooth communication is low, a multi-channel lossless audio cannot be implemented. Therefore, a multi-channel lossless audio solution is usually implemented through a Wi-Fi or WiSA connection.

A networking of a smart television and a smart speaker is used as an example. Currently, an audio-related component in the smart television or the smart speaker may implement clock source synchronization, but clock signals of audio-related components of different devices are naturally not synchronized. When local audios of the smart television and the smart speaker and a wireless audio of an external speaker are played together, the smart television, the smart speaker, and the external speaker can only use asynchronous audio clock signals provided by their own systems to play the audios. As a result, the wireless audio and local audio cannot be played at a same frequency and phase. This causes problems such as sound frequency deviation, playing asynchronization, and playing phase jitter on associated sound channels in a plurality of sound channels, and further affects audio quality.

### SUMMARY

Embodiments of this application provide a communication apparatus, a synchronization method, and a system, to implement data processing synchronization between a primary device and a secondary device.

According to a first aspect, a communication apparatus is provided, used in a first electronic device in a communication system. The communication system includes one primary device and at least one secondary device, the first device is the primary device or a secondary device in the communication system, and the communication apparatus includes:
a wireless communication unit, configured to send or receive a signal used for synchronization of a communication clock signal, where when the first electronic device is the primary device, the wireless communication unit is configured to send the signal used for synchronization of a communication clock signal, or when the first electronic device is a secondary device, the wireless communication unit is configured to receive the signal used for synchronization of a communication clock signal;
a clock circuit, configured to generate a data processing clock signal based on a communication clock signal, where the communication clock signal is used for wireless communication processing, and the data processing clock signal is used for data processing, where a communication clock signal of the first electronic device is synchronized with a communication clock signal of a second electronic device, and when the first electronic device is a secondary device, the communication clock signal of the first electronic device is obtained based on the received signal used for synchronization of a communication clock signal; and
a control module, configured to perform data processing and/or control a data output based on the data processing clock signal.

In the foregoing implementation, communication clock signal synchronization between the primary device and the secondary device may be implemented based on the signal used for synchronization of a communication clock signal, to implement timing synchronization of a communication link. Based on a feature that the primary device and the secondary device can implement timing synchronization of the communication link, the primary device and the secondary device may respectively generate data processing clock signals based on the communication clock signals, so that the data processing clock signals in the primary device and the secondary device can maintain high-precision synchronization. Because the communication clock signal may implement synchronization in a small time granularity (for example, time synchronization at a microsecond level), synchronization of the data processing clock signals in the primary device and the secondary device in a small time granularity may also be implemented, to implement more precise data processing synchronization between the primary device and the secondary device.

In a possible implementation, the signal used for synchronization of a communication clock signal may be a time synchronization frame that is periodically sent, for example, a TSF frame. The time synchronization frame includes a timestamp. The secondary device (for example, the first electronic device) may implement communication clock signal synchronization with the primary device (for example, the second electronic device) based on the received time synchronization frame.

In another possible implementation, the signal used for synchronization of a communication clock signal may be a periodic signal with a specified frequency, or referred to as a carrier signal. A frequency and/or a phase of the carrier signal are/is correlated with a communication clock signal of a primary device. The secondary device (for example, the first electronic device) may obtain a communication clock signal of the secondary device based on detection of the frequency and/or the phase of the carrier signal, to implement communication clock signal synchronization with the primary device (for example, the second electronic device).

In a possible implementation, the clock circuit includes a first clock circuit and a second clock circuit. The first clock circuit is configured to generate the communication clock signal, and send the communication clock signal to the second clock circuit; and the second clock circuit is configured to generate the data processing clock signal based on the communication clock signal output by the first clock circuit.

Generally, the electronic device includes the first clock circuit configured to generate a communication clock signal. In the foregoing implementation, the second clock circuit may be disposed based on the existing first clock circuit, to generate the data processing clock signal based on the communication clock signal output by the first clock circuit. This implementation has a clear logical architecture and is technically easy to implement.

In a possible implementation, the second clock circuit is specifically configured to perform frequency division on the communication clock signal output by the first clock circuit, to obtain the data processing clock signal. Generally, a frequency of a communication clock signal is high. A data processing clock signal of a low frequency may be obtained by performing frequency division on the communication clock signal.

Optionally, the second clock circuit is a frequency divider or a phase-locked loop circuit.

Optionally, a frequency division ratio of the second clock circuit is preset; or a frequency division ratio of the second clock circuit is obtained through negotiation between the first electronic device and the second electronic device.

In a possible implementation, the signal used for synchronization of a communication clock signal includes a time synchronization frame that is periodically sent, where the time synchronization frame includes a timestamp; or the signal used for synchronization of a communication clock signal includes a clock synchronization signal, where the clock synchronization signal is a periodic signal with a specified frequency, and a frequency and/or a phase of the clock synchronization signal are/is correlated with a communication clock signal of a primary device.

In a possible implementation, the data processing clock signal is an audio clock signal, an output module is an audio player, and the control module includes a first audio module. The first audio module is configured to control, based on the audio clock signal, an audio data stream to be output to the audio player, where the audio player is configured to play the audio data stream. In this implementation, audio synchronization between the primary device and the secondary device can be implemented.

In a possible implementation, the communication apparatus may further include a second audio module. When the first electronic device is the primary device, the second audio module is configured to: receive and buffer audio data, encapsulate the buffered audio data into an audio data packet, and transfer the audio data packet to the wireless communication unit, and the wireless communication unit is further configured to send the audio data packet from the second audio module to the second electronic device. Alternatively, when the first electronic device is a secondary device, the wireless communication unit is further configured to receive an audio data packet from the second electronic device, and send the audio data packet to the second audio module, and the second audio module is configured to decapsulate the audio data packet from the wireless communication unit into audio data and buffer the audio data, where the buffered audio data is sent to the first audio module. In the foregoing implementation, for the primary device, processing such as encapsulation and buffering is performed on the audio data by the second audio module, so that the audio data is sent to the secondary device through the wireless communication unit. For the secondary device, processing such as decapsulation and buffering is performed on the audio data by the second audio module, so that the audio data is provided to the first audio module.

In a possible implementation, when the first electronic device is the primary device, a sound channel to which audio data sent by the second audio module to the wireless communication unit belongs is the same as a sound channel to which audio data output by the first audio module to the audio player belongs, so that multi-channel stereo listening experience can be implemented. Alternatively, a sound channel to which audio data sent by the second audio module to the wireless communication unit belongs is a part of sound channels of a multi-channel audio output by the first audio module to the audio player. When there are a plurality of secondary devices, if audio data received by different secondary devices belongs to different sound channels, multi-channel stereo listening experience may be implemented.

In a possible implementation, the second clock module is further configured to output the audio clock signal to an audio monitoring unit, where the audio monitoring unit is configured to collect audio data based on the audio clock signal.

In a possible implementation, the control module is specifically configured to: generate a light control signal based on the data processing clock signal and a light conversion strategy, and output the light control signal to a light control device, to implement light effect synchronization between the primary device and the secondary device.

In a possible implementation, the first electronic device includes a wireless communication circuit module and a main control system circuit module; the wireless communication unit, the first clock circuit, the second clock circuit, and the second audio module are disposed in the wireless communication circuit module; and the first audio module is disposed in the main control system circuit module.

In the foregoing structure, the audio clock signal is mounted on the wireless communication circuit module, that is, the audio clock signal is provided by the second clock circuit in the wireless communication circuit module, and an audio data signal is mounted on the first audio module in the main control system circuit module. This structure can be used when the main control system circuit module supports an external audio clock input. Generally, the main control system circuit module has a high processing capability and performance. Therefore, when the audio data is received and sent by the main control system circuit module, the capability and performance of the main control system circuit module can be fully utilized.

In a possible implementation, the first electronic device includes a wireless communication circuit module, and the wireless communication unit, the first clock circuit, the second clock circuit, the first audio module, and the second audio module are disposed in the wireless communication circuit module.

In the foregoing structure, the audio clock signal is mounted on the wireless communication circuit module, and the second clock circuit in the wireless communication circuit module provides the audio clock signal for the audio player (for example, a loudspeaker). An audio data signal of the audio player (for example, a loudspeaker) is also mounted on the wireless communication circuit module. The structure may not depend on a capability of the main control system circuit module to transmit the audio clock signal and the audio data, and is applicable to a case in which the main control system circuit module does not support an external audio clock input.

In a possible implementation, the first electronic device includes a wireless communication circuit module and a main control system circuit module; the wireless communication unit, the first clock circuit, and the second audio module are disposed in the wireless communication circuit module; and the second clock circuit and the first audio module are disposed in the main control system circuit module.

In the foregoing structure, the audio clock signal is mounted on the main control system circuit module, that is, the audio clock signal is provided by the second clock circuit in the main control system circuit module, and an audio data signal is mounted on the first audio module in the main control system circuit module. The structure is applicable to a case in which the main control system circuit module has a capability of inputting an external reference clock and regenerating an audio system clock, and can make full use of the capability and performance of the main control system circuit module.

According to a second aspect, an electronic device is provided, where the electronic device includes the communication apparatus according to any implementation of the first aspect.

According to a third aspect, a communication system is provided, where the communication system includes a primary device and at least one secondary device connected to the primary device. The primary device is configured to: send a signal used for synchronization of a communication clock signal to the secondary device; and generate a data processing clock signal based on the communication clock signal, and perform data processing and/or control a data output based on the data processing clock signal, where the data processing clock signal is used for data processing. The secondary device is configured to: obtain a communication clock signal based on the received signal used for synchronization of a communication clock signal, where the communication clock signal is used for wireless communication processing, and a communication clock signal of the secondary device is synchronized with a communication clock signal of the primary device; and generate a data processing clock signal based on the communication clock signal, and perform data processing and/or control a data output based on the data processing clock signal.

In a possible implementation, the signal used for synchronization of a communication clock signal may be a time synchronization frame that is periodically sent, for example, a TSF frame. The time synchronization frame includes a timestamp. The secondary device (for example, a first electronic device) may implement communication clock signal synchronization with the primary device (for example, a second electronic device) based on the received time synchronization frame.

In another possible implementation, the signal used for synchronization of a communication clock signal may be a periodic signal with a specified frequency, or referred to as a carrier signal. A frequency and/or a phase of the carrier signal are/is correlated with a communication clock signal of the primary device. The secondary device (for example, the first electronic device) may obtain a communication clock signal of the secondary device based on detection of the frequency and/or the phase of the carrier signal, to implement communication clock signal synchronization with the primary device (for example, the second electronic device).

Optionally, the communication system may be applied to an audio synchronization scenario. In this scenario, the data processing clock signal is an audio clock signal, and a control module may control, based on the audio clock signal, audio data to be output to an audio player.

Optionally, the communication system may be applied to a light effect synchronization scenario. In this scenario, a control module may generate a light control signal based on the data processing clock signal and a light conversion strategy, and output the light control signal to a light control device.

In a possible implementation, the primary device includes: a wireless communication unit, configured to send the signal used for synchronization of a communication clock signal to the secondary device; a clock circuit, configured to generate the data processing clock signal based on the communication clock signal; and a control module, configured to perform data processing and/or control a data output based on the data processing clock signal.

In a possible implementation, the clock circuit includes: a first clock circuit, configured to generate the communication clock signal, and send the communication clock signal to a second clock circuit; and the second clock circuit, configured to generate the data processing clock signal based on the communication clock signal output by the first clock circuit.

Optionally, the second clock circuit is specifically configured to perform frequency division on the communication clock signal output by the first clock circuit, to obtain the data processing clock signal.

In a possible implementation, the data processing clock signal is an audio clock signal, and the primary device further includes a first audio module. The first audio module is configured to control, based on the audio clock signal, audio data to be output to an audio player.

In a possible implementation, the primary device further includes a second audio module. The second audio module is configured to: receive and buffer audio data, encapsulate the buffered audio data into an audio data packet, and transfer the audio data packet to the wireless communication unit, and the wireless communication unit is further configured to send the audio data packet from the second audio module to the second electronic device.

Optionally, the wireless communication unit, the first clock circuit, the second clock circuit, and the second audio module in the primary device are disposed in a wireless communication circuit module in the primary device, and the first audio module in the primary device is disposed in a main control system circuit module in the primary device.

Optionally, the wireless communication unit, the first clock circuit, the second clock circuit, the first audio module, and the second audio module in the primary device are disposed in a wireless communication circuit module in the primary device.

Optionally, the wireless communication unit, the first clock circuit, and the second audio module in the primary device are disposed in a wireless communication circuit module in the primary device, and the second clock circuit and the first audio module in the primary device are disposed in a main control system circuit module in the primary device.

In a possible implementation, the secondary device includes: a wireless communication unit, configured to receive the signal used for synchronization of a communication clock signal; a clock circuit, configured to generate the data processing clock signal based on a communication clock signal; and a control module, configured to perform data processing and/or control the data output based on the data processing clock signal.

In a possible implementation, the clock circuit includes: a first clock circuit, configured to: generate the communication clock signal based on a signal that is from the primary device and that is used for synchronization of a communication clock signal, and send the communication clock signal to a second clock circuit; and the second clock circuit, configured to generate the data processing clock signal based on the communication clock signal output by the first clock circuit.

Optionally, the second clock circuit is specifically configured to perform frequency division on the communication clock signal output by the first clock circuit, to obtain the data processing clock signal.

In a possible implementation, the data processing clock signal is an audio clock signal, and the secondary device further includes a first audio module. The first audio module is configured to control, based on the audio clock signal, audio data to be output to an audio player.

In a possible implementation, the secondary device further includes a second audio module; the wireless communication unit is further configured to: receive an audio data packet from the second electronic device, and send the audio data packet to the second audio module; and the second audio module is configured to decapsulate the audio data packet from the wireless communication unit into audio data and buffer the audio data, where the buffered audio data is sent to the first audio module.

Optionally, the wireless communication unit, the first clock circuit, the second clock circuit, and the second audio module in the secondary device are disposed in a wireless communication circuit module in the secondary device, and the first audio module in the secondary device is disposed in a main control system circuit module in the secondary device.

Optionally, the wireless communication unit, the first clock circuit, the second clock circuit, the first audio module, and the second audio module in the secondary device are disposed in a wireless communication circuit module in the secondary device.

Optionally, the wireless communication unit, the first clock circuit, and the second audio module in the secondary device are disposed in a wireless communication circuit module in the secondary device, and the second clock circuit and the first audio module in the secondary device are disposed in a main control system circuit module in the secondary device.

According to a fourth aspect, a synchronization method is provided, applied to a communication system, where the communication system includes one primary device and at least one secondary device. The method includes: The primary device sends a signal used for synchronization of a communication clock signal to the secondary device, where the communication clock signal is used for wireless communication processing, and a communication clock signal of the secondary device is synchronized with a communication clock signal of the primary device; the primary device and the secondary device respectively generate data processing clock signals based on the communication clock signals, where the data processing clock signal is used for data processing; and the primary device and the secondary device respectively perform data processing and/or control data outputs based on the data processing clock signals.

In a possible implementation, the signal used for synchronization of a communication clock signal includes a time synchronization frame that is periodically sent, where the time synchronization frame includes a timestamp; or the signal used for synchronization of a communication clock signal includes a clock synchronization signal, where the clock synchronization signal is a periodic signal with a specified frequency, and a frequency and/or a phase of the clock synchronization signal are/is correlated with the communication clock signal of the primary device.

In a possible implementation, the generating data processing clock signals based on the communication clock signals includes: performing frequency division on the communication clock signal to obtain the data processing clock signal.

In a possible implementation, a frequency division ratio used when the frequency division is performed on the communication clock signal is preset, or a frequency division ratio is obtained through negotiation between the primary device and the secondary device.

In a possible implementation, the data processing clock signal is an audio clock signal, and the performing data processing and/or controlling data outputs based on the data processing clock signals includes: controlling, based on the audio clock signal, an audio data stream to be output to an audio player, where the audio player is configured to play the audio data stream.

In a possible implementation, the method further includes: The primary device encapsulates audio data into an audio data packet, and sends the audio data packet to the secondary device; and the secondary device receives the audio data packet from the primary device, decapsulates the audio data packet into audio data, and buffers the audio data.

In a possible implementation, a channel to which audio data sent by the primary device to the secondary device belongs is the same as a channel to which audio data output to the audio player belongs. Alternatively, a channel to which audio data sent to the secondary device belongs is a part of sound channels of a multi-channel audio output to the audio player.

In a possible implementation, the method further includes: The primary device and/or the secondary device output/outputs the audio clock signal to an audio monitoring unit, where the audio monitoring unit is configured to collect audio data based on the audio clock signal.

In a possible implementation, the performing data processing and/or controlling data outputs based on the data processing clock signals includes: generating a light control signal based on the data processing clock signal and a light conversion strategy, and outputting the light control signal to a light control device.

According to a fifth aspect, a synchronization method is provided, and is applied to a primary device in a communication system. The method includes: sending a signal used for synchronization of a communication clock signal to a secondary device in the communication system, where the communication clock signal is used for wireless communication processing, a communication clock signal of the secondary device is synchronized with a communication clock signal of the primary device, and the communication clock signal of the secondary device is obtained based on the received signal used for synchronization of a communication clock signal; generating a data processing clock signal based on the communication clock signal, where the data processing clock signal is used for data processing; and performing data processing and/or controlling a data output based on the data processing clock signal.

In a possible implementation, the signal used for synchronization of a communication clock signal includes a time synchronization frame that is periodically sent, where the time synchronization frame includes a timestamp; or the signal used for synchronization of a communication clock signal includes a clock synchronization signal, where the clock synchronization signal is a periodic signal with a specified frequency, and a frequency and/or a phase of the clock synchronization signal are/is correlated with the communication clock signal of the primary device.

In a possible implementation, the generating a data processing clock signal based on the communication clock signal includes: performing frequency division on the communication clock signal to obtain the data processing clock signal.

In a possible implementation, a frequency division ratio used when the frequency division is performed on the communication clock signal is preset, or a frequency division ratio is obtained through negotiation between the primary device and the secondary device.

In a possible implementation, the data processing clock signal is an audio clock signal, and the performing data processing and/or controlling a data output based on the data processing clock signal includes: controlling, based on the audio clock signal, an audio data stream to be output to an audio player, where the audio player is configured to play the audio data stream.

In a possible implementation, the method further includes: encapsulating audio data into an audio data packet, and sending the audio data packet to the secondary device.

In a possible implementation, a channel to which audio data sent to the secondary device belongs is the same as a channel to which audio data output to the audio player belongs. Alternatively, a channel to which audio data sent to the secondary device belongs is a part of sound channels of a multi-channel audio output to the audio player.

In a possible implementation, the method further includes: outputting the audio clock signal to an audio monitoring unit, where the audio monitoring unit is configured to collect audio data based on the audio clock signal.

In a possible implementation, the performing data processing and/or controlling a data output based on the data processing clock signal includes: generating a light control signal based on the data processing clock signal and a light conversion strategy, and outputting the light control signal to a light control device.

According to a sixth aspect, a synchronization method is provided and is applied to a secondary device in a communication system. The method includes: receiving a signal that is used for synchronization of a communication clock signal and that is sent by a primary device in the communication system, and generating a communication clock signal based on the signal used for synchronization of a communication clock signal, where the communication clock signal is used for wireless communication processing, and a communication clock signal of the secondary device is synchronized with a communication clock signal of the primary device; generating a data processing clock signal based on the communication clock signal, where the data processing clock signal is used for data processing; and performing data processing and/or controlling a data output based on the data processing clock signal.

In a possible implementation, the signal used for synchronization of a communication clock signal includes a time synchronization frame that is periodically sent, where the time synchronization frame includes a timestamp; or the signal used for synchronization of a communication clock signal includes a clock synchronization signal, where the clock synchronization signal is a periodic signal with a specified frequency, and a frequency and/or a phase of the clock synchronization signal are/is correlated with the communication clock signal of the primary device.

**In** a possible implementation, the generating a data processing clock signal based on the communication clock signal includes: performing frequency division on the communication clock signal to obtain the data processing clock signal.

**In** a possible implementation, a frequency division ratio used when the frequency division is performed on the communication clock signal is preset, or a frequency division ratio is obtained through negotiation between the primary device and the secondary device.

In a possible implementation, the data processing clock signal is an audio clock signal, and the performing data processing and/or controlling a data output based on the data processing clock signal includes: controlling, based on the audio clock signal, an audio data stream to be output to an audio player, where the audio player is configured to play the audio data stream.

In a possible implementation, the method further includes: receiving an audio data packet from the primary device, decapsulating the audio data packet into audio data, and buffering the audio data.

In a possible implementation, the method further includes: outputting the audio clock signal to an audio monitoring unit, where the audio monitoring unit is configured to collect audio data based on the audio clock signal.

In a possible implementation, the performing data processing and/or controlling a data output based on the data processing clock signal includes: generating a light control signal based on the data processing clock signal and a light conversion strategy, and outputting the light control signal to a light control device.

According to a seventh aspect, a computer-readable storage medium is provided. The computer-readable storage medium includes a computer program, and when the computer program is run on a computing device, the computing device is enabled to perform the method according to the fifth aspect or the sixth aspect.

According to an eighth aspect, a chip system is provided. The chip system includes at least one chip and a memory, and the at least one chip is coupled to the memory, and is configured to read and execute program instructions stored in the memory, to implement the method according to the fifth aspect or the sixth aspect.

According to a ninth aspect, a computer program product is provided. When the computer program product is invoked by a computer, the computer is enabled to perform the method according to the fifth aspect or the sixth aspect.

For beneficial effects of the second aspect to the ninth aspect, refer to beneficial effects of the first aspect. Details are not described again.

### BRIEF DESCRIPTION OF DRAWINGS

FIG. 1 is a diagram of an application scenario in which a smart television and a speaker are wirelessly networked according to an embodiment of this application;
FIG. 2A and FIG. 2B are a diagram of an application scenario in which a primary speaker and a secondary speaker are wirelessly networked according to an embodiment of this application;
FIG. 3A and FIG. 3B are a diagram of performing audio synchronization between a primary device and a secondary device through software according to an embodiment of this application;
FIG. 4 is a diagram of a structure of a communication apparatus according to an embodiment of this application;
FIG. 5 is a diagram of a structure of a phase-locked loop circuit according to an embodiment of this application;
FIG. 6 is a diagram of a structure of a second clock circuit according to an embodiment of this application;
FIG. 7 is a diagram of a structure of a communication apparatus for implementing audio synchronization according to an embodiment of this application;
FIG. 8 is a diagram of a structure of a communication apparatus for implementing audio synchronization according to Example 1 in an embodiment of this application;
FIG. 9 is a diagram of a structure of a communication apparatus for implementing audio synchronization according to Example 2 in an embodiment of this application;
FIG. 10 is a diagram of a structure of a communication apparatus for implementing audio synchronization according to Example 3 in an embodiment of this application;
FIG. 11A and FIG. 11B are a diagram of a structure of a communication system including a primary device and a secondary device according to an embodiment of this application;
FIG. 12A and FIG. 12B are a diagram of a structure of another communication system including a primary device and a secondary device according to an embodiment of this application;
FIG. 13A and FIG. 13B are a diagram of a structure of another communication system including a primary device and a secondary device according to an embodiment of this application;
FIG. 14 is a flowchart block diagram of a synchronization method according to an embodiment of this application;
FIG. 15 is a schematic flowchart of an audio synchronization method according to an embodiment of this application;
FIG. 16 is a diagram of a structure of a chip according to an embodiment of this application; and
FIG. 17 is a diagram of a structure of a chip system according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. Terms "one", "a", "the", "the foregoing", and "this" of singular forms used in this specification and the appended claims of this application are also intended to include expressions such as "one or more", unless the context clearly indicates to the contrary. It should be further understood that, in the embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. A character "/" generally indicates an "or" relationship between the associated objects.

Reference to "an embodiment", "some embodiments", or the like described in this specification indicates that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

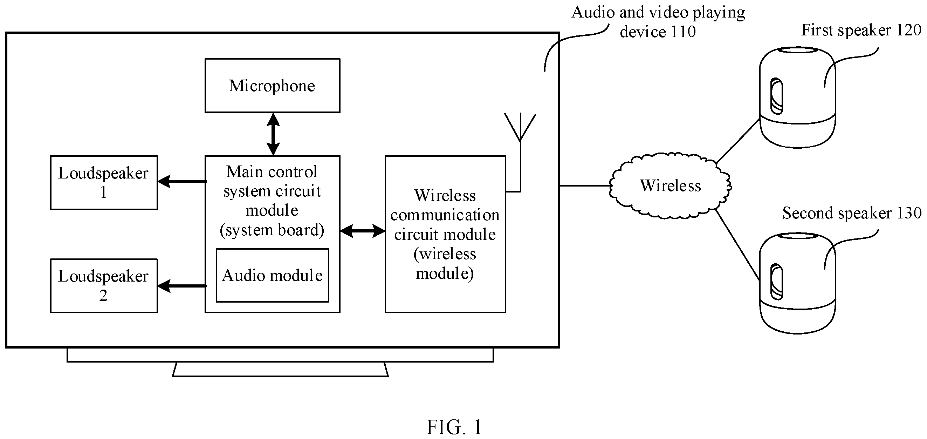

FIG. 1 is a diagram of an application scenario to which an embodiment of this application is applicable. As shown in FIG. 1, an audio and video playing device 110 is connected to a first speaker 120 and a second speaker 130 through a wireless communication link. The wireless communication link may be a Wi-Fi link, a Bluetooth link, NearLink (which may also be referred to as SparkLink, and is a next-generation wireless short-range communication technology), a WiSA link, or another wireless communication link. This is not limited in embodiments of this application. The audio and video playing device 110, the first speaker 120, and the second speaker 130 are combined to implement a multi-channel stereo scenario. The audio and video playing device 110 is a primary device, and the first speaker 120 and the second speaker 130 are secondary devices. The audio and video playing device 110 used as a primary device may provide audio data for the first speaker 120 and the second speaker 130 used as secondary devices, so that the audio and video playing device 110, the first speaker 120, and the second speaker 130 may synchronously play the audio data. In this way, a user obtains multi-channel stereo listening experience. A sound channel (sound channel) refers to mutually independent audio signals collected or played back at different spatial locations during sound recording or playing. For example, quadraphonic sound can achieve surround stereo effect, and four sound channels correspond to four sound-making points: the front left, the front right, the rear left, and the rear right.

The audio and video playing device 110 used as a primary device may play a local audio, and an external speaker (for example, the first speaker 120 and the second speaker 130 in the figure) used as secondary devices may play a local audio and a wireless audio. Herein, the local audio refers to one or more sound channels in a multi-channel audio played by an electronic device (for example, the audio and video playing device 110 or the external speaker), and the wireless audio refers to one or more sound channels in a multi-channel audio transmitted wirelessly to the external speaker and played by the external speaker. The wireless audio and local audio belong to a same group of a multi-channel audio. FIG. 1 is used as an example. The audio and video playing device 110 plays quadraphonic sound, and transmits audio data of each channel in the quadraphonic sound to the first speaker 120 and the second speaker 130, so that the first speaker 120 and the second speaker 130 play the received audio data of four channels.

Some examples of the audio and video playing device 110 include a smart television, a tablet computer, and the like. In FIG. 1, for example, the audio and video playing device 110 is a smart television. An internal structure of the audio and video playing device 110 includes a main control system circuit module. The main control system circuit module is also referred to as a system board or a main chip, and an audio module is disposed on the main control system circuit module. The audio module may output audio data to loudspeakers (for example, a loudspeaker 1 and a loudspeaker 2 in the figure), and the loudspeaker may play the received audio data. The audio module may further receive audio data collected by a microphone. The audio and video playing device 110 further includes a wireless communication circuit module. The wireless communication circuit module may also be referred to as a wireless module, and a specific implementation form may be, for example, a wireless communication chip. The wireless communication module is configured to implement a function of wireless communication with another device. For example, control information may be sent to the first speaker 120 and the second speaker 130 by using the wireless communication circuit module, or audio data may be sent to the first speaker 120 and the second speaker 130. For example, the wireless communication circuit module may use a Wi-Fi or WiSA communication protocol.

Structures of the first speaker 120 and the second speaker 130 also include an audio module, a loudspeaker, a wireless communication circuit module, and the like, to implement an audio playing function and a wireless communication function.

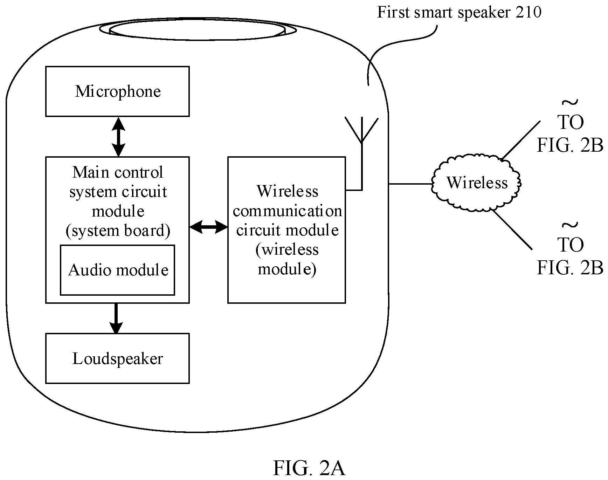

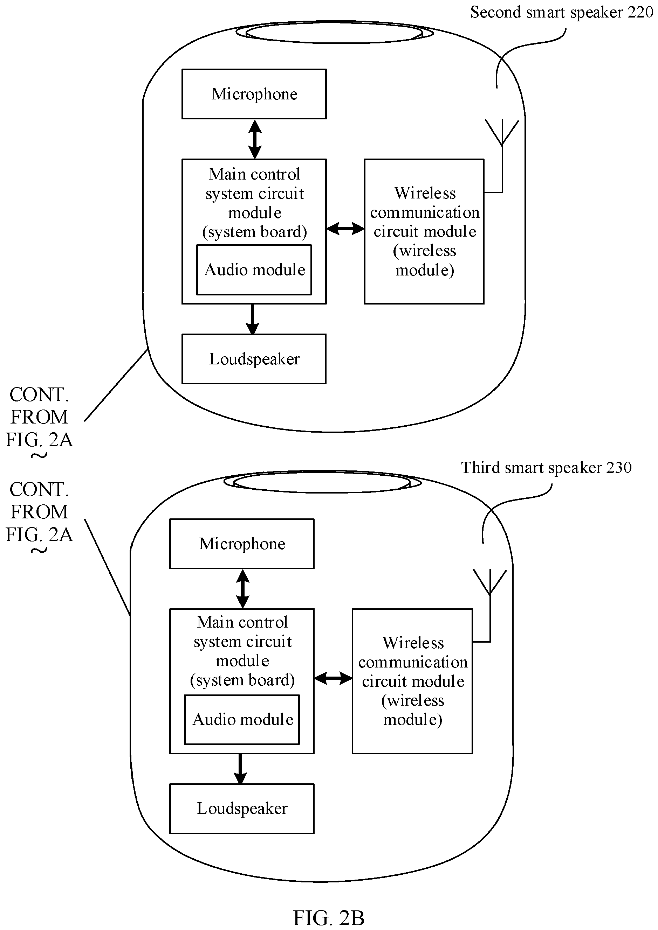

FIG. 2A and FIG. 2B are a diagram of another application scenario to which an embodiment of this application is applicable. Similar to that in the application scenario shown in FIG. 1, in this application scenario, a first smart speaker 210 is used as a primary device, and is combined with a second smart speaker 220 and a third smart speaker 230 that are used as secondary devices to implement a multi-channel stereo scenario. The first smart speaker 210, the second smart speaker 220, and the third smart speaker 230 each may include hardware components such as a main control system circuit module, a wireless communication circuit module, a loudspeaker, and a microphone.

FIG. 1, FIG. 2A, and FIG. 2B show only possible application scenarios as examples. In another possible application scenario, only one secondary device may be included, or more than two secondary devices may be included. In addition, the primary device and the secondary device may alternatively be electronic devices of other types. For example, the primary device may be a mobile phone, a wearable device, or the like. Compared with the foregoing two possible application scenarios, each primary device and each secondary device may include more or fewer components. This is not limited in embodiments of this application.

Currently, in the application scenario shown in FIG. 1, or FIG. 2A and FIG. 2B, an audio clock signal of the primary device is generated by an audio clock circuit inside the primary device, an audio clock signal of the secondary device is generated by an audio clock circuit in the secondary device, and more precise same-phase and same-frequency synchronization of the audio clock signal of the primary device and the audio clock signal of the secondary device cannot be implemented. As a result, higher-precision synchronization of an audio of the primary device and an audio of the secondary device cannot be implemented.

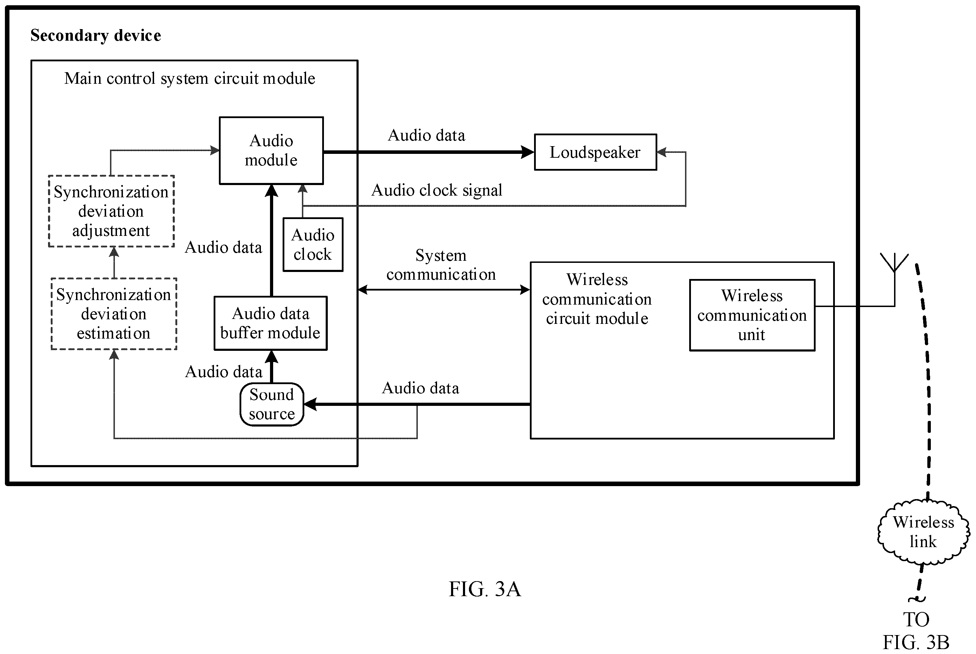

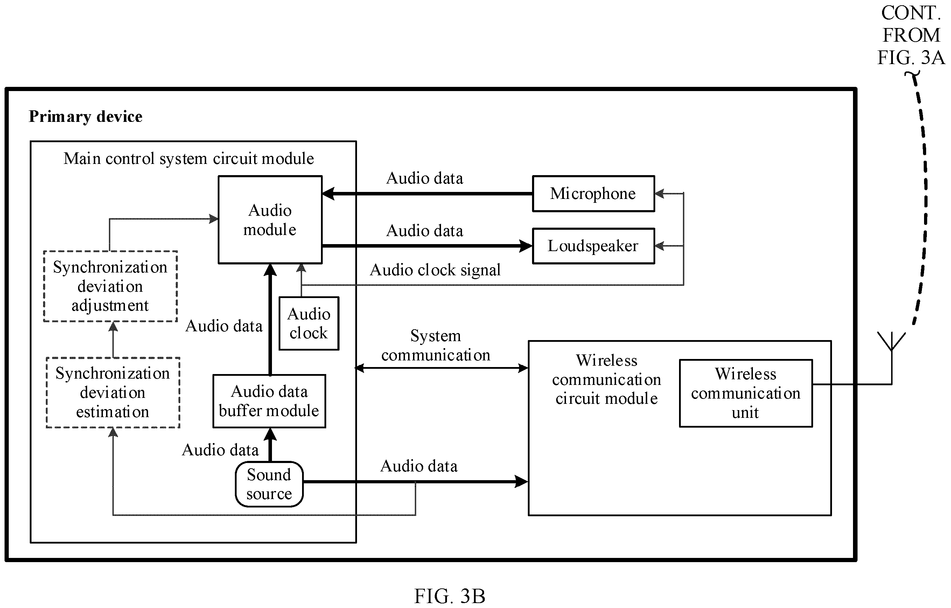

To resolve the problem to some extent, a possible solution is to perform clock deviation calculation on the audio clock signals between the primary device and the secondary device based on a periodicity through software, and periodically adjust audio play delays based on calculated clock deviation, to maintain synchronization of the audio clock signals of the primary device and the secondary device as much as possible. As shown in FIG. 3A and FIG. 3B, audio clock circuit modules in a primary device and a secondary device respectively generate audio clock signals, and provide the audio clock signals to related modules used for audio processing in the device, for example, including an audio module and a loudspeaker. To synchronize audio clocks of the primary device and the secondary device, the primary device and the secondary device periodically adjust their audio play delays through software to implement audio synchronization between the primary device and the secondary device. On a primary device side, a software module (for example, "synchronization deviation estimation" and "synchronization deviation adjustment" shown in the figure) in the primary device estimates, based on a timestamp in an audio stream that is output by the main control system circuit module and that is required to be sent to the secondary device, synchronization deviation with the audio stream received by the secondary device, and adjusts an audio play delay based on the estimated synchronization deviation. On a secondary device side, a software module (for example, "synchronization deviation estimation" and "synchronization deviation adjustment" shown in the figure) in the secondary device estimates, based on a timestamp in an audio stream that is received by the main control system circuit module and that is from the primary device, synchronization deviation with the audio stream of the primary device, and adjusts an audio play delay based on the estimated synchronization deviation.

However, the foregoing solution still cannot implement high-precision audio synchronization between the primary device and the secondary device. This is because in the foregoing solution, audio synchronization deviation is estimated and adjusted through software. On one hand, estimation precision cannot reach a level of a small time granularity (for example, cannot reach a microsecond level). On the other hand, because a time unit of a small granularity (for example, a microsecond level) cannot be reached due to a limited adjustment granularity and adjustment periodicity, the foregoing audio synchronization adjustment manner has deviation and fluctuation. As a result, audio image drift is caused.

Embodiments of this application provide a communication apparatus and a related synchronization method. In embodiments of this application, based on a feature that the primary device and the secondary device can implement timing synchronization of a communication link, a clock signal used for data processing (referred to as a data processing clock signal in the following descriptions for ease of description) is obtained based on a clock signal used for wireless communication processing (referred to as a communication clock signal in the following descriptions for ease of description), so that data processing clock signals in the primary device and the secondary device can maintain high-precision synchronization. Because communication clock signals may implement synchronization in a small time granularity (for example, time synchronization at a microsecond level), correspondingly, synchronization of the data processing clock signals in the primary device and the secondary device in a small time granularity may also be implemented, to implement more precise data processing synchronization between the primary device and the secondary device.

In addition to the foregoing application scenario in which synchronous audio playing is performed based on the architectures of the primary device and the secondary device, embodiments of this application may be further applied to another similar application scenario, for example, a scenario in which data synchronization processing is performed based on the architectures of the primary device and the secondary device. For example, an application scenario in which the primary device and the secondary device with a lighting function synchronously implement lighting effect, and another application scenario in which the primary device and the secondary device with a vibration function synchronously perform vibration.

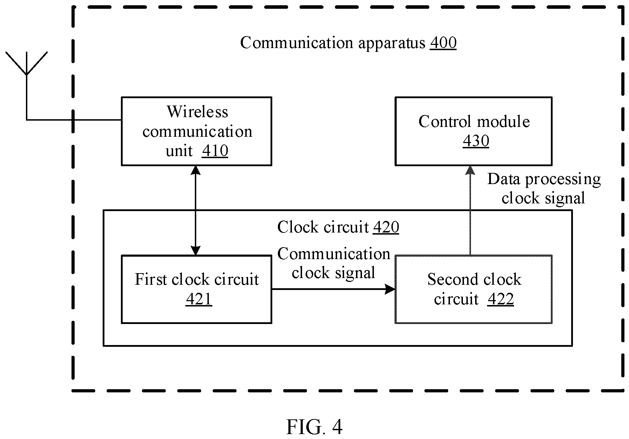

FIG. 4 is a diagram of a structure of a communication apparatus according to an embodiment of this application.

A communication apparatus 400 shown in FIG. 4 may be a first electronic device, and the first electronic device may be the primary device or the secondary device in the foregoing application scenario. For example, the first electronic device may be the audio and video playing device 110 in FIG. 1, or may be the first speaker 120 or the second speaker 130 in FIG. 1. For another example, the first electronic device may be the first smart speaker 210 in FIG. 2A, or may be the second smart speaker 220 or the third smart speaker 230 in FIG. 2B. Alternatively, the communication apparatus 400 may be a component that is in the primary device or the secondary device and that is configured to implement the synchronization function provided in embodiments of this application.

In this embodiment of this application, if the first electronic device is the primary device, the secondary device may be referred to as a second electronic device; or if the first electronic device is the secondary device, the primary device may be referred to as a second electronic device.

The communication apparatus 400 shown in FIG. 4 may include a wireless communication unit 410, a clock circuit 420, and a control module 430. In a possible implementation, the clock circuit 420 may include a first clock circuit 421 and a second clock circuit 422. In other words, the clock circuit 420 may be implemented by one circuit, or may be implemented by two circuits. Functions implemented by the clock circuit 420 when the clock circuit 420 is implemented by one circuit may be basically the same as functions implemented by the clock circuit 420 when the clock circuit 420 is implemented by two circuits.

The wireless communication unit 410 in the communication apparatus 400 may be a component that implements a wireless communication function. The component may be implemented by hardware, or may be implemented by software, or may be implemented by a combination of hardware and software. In an example in which the wireless communication unit 410 is implemented in a hardware manner, the wireless communication unit 410 may include a circuit configured to perform electrical signal processing and a radio frequency circuit configured to convert an electrical signal into a radio signal. For example, if the communication apparatus 400 in which the wireless communication unit 410 is located is a primary device or the first electronic device in which the communication apparatus 400 is located is a primary device, a circuit that is in the wireless communication unit 410 and that is configured to perform electrical signal processing may generate wireless link synchronization information, to send the wireless link synchronization information to a secondary device. If the communication apparatus 400 in which the wireless communication unit 410 is located is a secondary device or the first electronic device in which the communication apparatus 400 is located is a secondary device, a circuit that is in the wireless communication unit 410 and that is configured to perform electrical signal processing may parse wireless link synchronization information from a primary device, to generate a communication clock signal based on the wireless link synchronization information, so as to perform communication clock synchronization with the primary device. For example, the wireless communication unit 410 may be a wireless communication chip.

Optionally, the wireless communication unit 410 may comply with a Wi-Fi wireless communication protocol, a WiSA wireless communication protocol, or another wireless communication protocol. The Wi-Fi wireless communication protocol is used as an example. The first electronic device may establish, through the wireless communication unit 410, a wireless link (for example, including a link used for control information transmission and a link used for data transmission) with the second electronic device, so that the first electronic device and the second electronic device exchange control information, data, and the like through the wireless link. For example, when the first electronic device is used as a primary device and the second electronic device is used as a secondary device, the wireless communication unit in the first electronic device may send data to the second electronic device through a link used for data transmission; or when the first electronic device is used as a secondary device and the second electronic device is used as a primary device, the wireless communication unit in the first electronic device may receive, through a link used for data transmission, data sent by the second electronic device.

In this embodiment of this application, the primary device may send, to the secondary device, a signal or information used for synchronization of a communication clock signal, so that the secondary device generates the communication clock signals based on the information, to implement communication clock synchronization with the primary device. Optionally, in an implementation, the signal or information used for synchronization of a communication clock signal includes a time synchronization frame that is periodically sent. The time synchronization frame includes a timestamp. In another implementation, the information includes a clock synchronization signal, the clock synchronization signal is a periodic signal with a specified frequency, and a frequency and/or a phase of the clock synchronization signal are/is correlated with a communication clock signal of the primary device. The following provides two communication clock synchronization manners as examples: First communication clock synchronization manner and Second communication clock synchronization manner.

### (1) First communication clock synchronization manner:

When the communication apparatus 400 is a primary device or the first electronic device in which the communication apparatus 400 is located is a primary device, the wireless communication unit 410 may send wireless link synchronization information to a secondary device, so that a first clock circuit in the secondary device generates a communication clock signal based on the wireless link synchronization information from the primary device. Therefore, the secondary device maintains synchronization of communication clock signals with the primary device, for example, including time synchronization and phase synchronization.

Optionally, for a method for maintaining communication clock signal synchronization between the primary device and the secondary device based on the wireless link synchronization information, a related wireless communication timing synchronization method defined in a communication protocol may be used, for example, wireless communication timing synchronization is implemented based on a timing synchronization function (timing synchronization function, TSF) mechanism. For example, wireless communication timing synchronization is implemented based on the TSF mechanism. A TSF timer has 64 bits in total, and a unit is microsecond (µs). The primary device sends a beacon (beacon) frame (also referred to as a TSF frame). There is a timestamp (Timestamp) field in the beacon frame, and the field also includes 64 bits. Each beacon frame may have a timestamp. After receiving the beacon frame of the primary device, the wireless communication unit in the secondary device parses the beacon frame, extracts a timestamp of the Timestamp field, estimates a local delay of receiving local processing (for example, parsing the beacon frame) by the beacon frame from a local antenna port (namely, an antenna port of the secondary device), and adds the estimated local delay based on the timestamp to obtain time after delay compensation. Then, the first clock circuit in the secondary device generates a communication clock signal based on the time after delay compensation. In this way, time synchronization between the secondary device and the primary device is completed, and synchronization precision can reach a microsecond level. The primary device may send the beacon frame based on a periodicity indicated by target beacon transmission time (target beacon transmission time, TBTT), or the secondary device may receive the beacon frame based on a periodicity indicated by TBTT, so that timing synchronization is performed between the primary device and the secondary device based on the periodicity indicated by the TBTT.

### (2) Second communication clock synchronization manner:

When the communication apparatus 400 is a primary device or the first electronic device in which the communication apparatus 400 is located is a primary device, the wireless communication unit 410 may send a clock synchronization signal to a secondary device. The clock synchronization signal may be understood as a carrier signal, or may be a periodic signal, for example, may be a square wave signal with a specific frequency, or may be a sine wave signal. The clock synchronization signal is correlated with the communication clock signal of the primary device. For example, in a possible case, a frequency of the clock synchronization signal is the same as a frequency of the communication clock signal of the primary device, and a phase of the clock synchronization signal is the same as a phase of the communication clock signal of the primary device. In another possible case, a frequency of the clock synchronization signal and a frequency of the communication clock signal of the primary device are in a specified multiple relationship, and a phase of the clock synchronization signal is the same as a phase of the communication clock signal of the primary device. In another possible case, a frequency of the clock synchronization signal is the same as a frequency of the communication clock signal of the primary device, and a phase of the clock synchronization signal is opposite to a phase of the communication clock signal of the primary device. Certainly, there may be another case. This is not limited in this embodiment of this application.

The clock synchronization signal may be radiated outward in a form of an electromagnetic wave. The secondary device in a signal power coverage area may receive the clock synchronization signal, and may perform frequency and/or phase detection on the received clock synchronization signal. The secondary device generates a communication clock signal in the secondary device based on the detected frequency and/or phase and a correlation between the communication clock signal in the primary device and the clock synchronization signal (information about the correlation may be preconfigured in the secondary device). For example, if the communication clock signal in the primary device and the clock synchronization signal have a same frequency and phase, the secondary device generates, based on the detected frequency and phase, a communication clock signal with a frequency and phase the same as the detected frequency and phase. For another example, if a frequency of the clock synchronization signal is 1/N of a frequency of the communication clock signal of the primary device (N is an integer greater than or equal to 1), and a phase of the clock synchronization signal is the same as a phase of the communication clock signal of the primary device, the secondary device generates, based on the detected frequency and phase, a communication clock signal with a frequency that is N times the detected frequency and a phase the same as the detected phase. Because the clock synchronization signal is correlated with the communication clock signal in the primary device, the secondary device may generate, based on the clock synchronization signal and the correlation between the clock synchronization signal and the communication clock signal in the primary device, the communication clock signal synchronized with the communication clock signal of the primary device, to implement wireless communication time synchronization between the secondary device and the primary device.

Certainly, another communication clock synchronization method may also be used in this embodiment of this application. This is not limited in this embodiment of this application.

The first clock circuit 421 in the communication apparatus 400 is configured to generate a communication clock signal, and the communication clock signal is used for wireless communication processing. It may be understood that the communication clock signal may be a periodic signal, for example, a square wave signal or a sine wave signal with a specific frequency, and a frequency of the communication clock signal complies with a specification of a wireless communication protocol used by the communication apparatus 400.

Optionally, the communication clock signal in the primary device and the communication clock signal in the secondary device may have a same waveform and a same frequency, for example, may be square wave signals with a same frequency, or may have different waveforms. For example, the communication clock signal in the primary device is a square wave signal, and the communication clock signal in the secondary device is a sine wave signal with a same frequency as the square wave signal. After communication clock synchronization is performed by using the foregoing method in this embodiment of this application, high-precision synchronization, for example, synchronization at a microsecond level, of a frequency and a phase of the communication clock signal in the primary device and a frequency and a phase of the communication clock signal in the secondary device can be implemented.

The first clock circuit 421 has a plurality of possible implementations, for example, may be implemented by using a phase-locked loop circuit. This is not limited in this embodiment of this application. The following uses an example in which the first clock circuit 421 is implemented by using the phase-locked loop circuit for description.

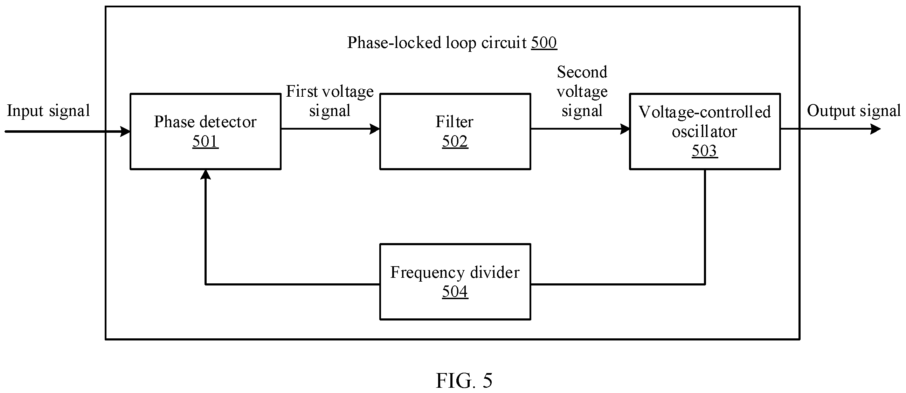

FIG. 5 shows an example of a structure of a phase-locked loop circuit 500. In the phase-locked loop circuit 500, a phase detector (phase detector, PD) 501, a filter (Loop Filter, LF) 502, and a voltage-controlled oscillator (Voltage-Controlled Oscillator, VCO) 503 form a forward path, and a frequency divider 504 forms a frequency phase feedback path. The phase detector 501 detects a phase difference between an input signal and an output signal, and an output signal of the voltage-controlled oscillator 503 is input to the phase detector 501 through the feedback path. The phase detector 501 converts a phase difference between the input signal and a feedback signal into a voltage signal (a first voltage signal shown in the figure) for output. After the voltage signal is filtered by the low-pass filter 502, a control voltage (a second voltage signal shown in the figure) of the voltage-controlled oscillator 503 is formed. A frequency of the output signal of the voltage-controlled oscillator 503 is controlled, and then the frequency and a phase of the output signal of the voltage-controlled oscillator 503 are fed back to the phase detector 501 through the feedback path. When the frequency of the output signal proportionally reflects a frequency of the input signal, an output voltage and an input voltage maintain a fixed phase difference. In this way, phases of the output voltage and the input voltage are locked, so that frequency and phase synchronization between the output signal and the input signal can be implemented. Optionally, a frequency division ratio of the frequency divider 504 may be 1: 1. In this case, the frequency of the output signal is the same as the frequency of the input signal. The frequency division ratio of the frequency divider 504 may also be 1:N (N is an integer greater than 1). In this case, the frequency of the output signal is 1/N of the frequency of the input signal.

In a possible implementation, in the primary device, an input signal of the first clock circuit implemented by using the phase-locked loop circuit may be a periodic reference signal, an output signal of the first clock circuit may be a communication clock signal, and a frequency of the input signal may be an integer multiple of a frequency of the output signal. Based on the communication clock synchronization manner described in the foregoing embodiment, in a possible implementation, in the secondary device, an input signal of the first clock circuit implemented by using the phase-locked loop circuit may be a periodic signal generated based on wireless link synchronization information (for example, a TSF frame) received by the wireless communication unit in the secondary device, and an output signal of the first clock circuit may be a communication clock signal. In another possible implementation, in the secondary device, an input signal of the first clock circuit implemented by using the phase-locked loop circuit may be a clock synchronization signal detected by the wireless communication unit of the secondary device (the clock synchronization signal is sent by the primary device), and an output signal of the first clock circuit may be a communication clock signal.

The first clock circuit 421 in the communication apparatus 400 outputs the generated communication clock signal to the second clock circuit 422. The second clock circuit 422 is configured to generate a data processing clock signal based on a communication clock signal, where the data processing clock signal may be used for data processing.

Optionally, the data processing clock signal may be a periodic signal, for example, may be a square wave signal or a sine wave signal.

In a possible implementation, the second clock circuit 422 may perform frequency division on the communication clock signal based on a frequency division ratio, to obtain the data processing clock signal. When a frequency of the communication clock signal and a frequency of the data processing clock signal are in an integer multiple relationship, frequency division may be performed on the communication clock signal based on a specific frequency division ratio, to obtain the data processing clock signal. For example, data that needs to be processed is audio data, and Wi-Fi communication is used. A clock frequency required during Wi-Fi communication is 1 MHz, and a clock frequency required during audio processing is 16 kHz to 96 kHz. Therefore, the communication clock signal may be converted into the data processing clock signal by using a frequency divider with a frequency division ratio of 1:64.

In a possible implementation, frequency division ratios used by the second clock circuits of the primary device and the secondary device are respectively fixed. Optionally, the frequency division ratios used by the second clock circuits of the primary device and the secondary device may be the same or may be different. Specifically, the frequency division ratio to be used may be determined based on a capability of an audio processing-related module of each device or a requirement on audio quality.

In a possible implementation, the frequency division ratio used by the second clock circuit 422 is obtained through negotiation. For example, the primary device and the secondary device negotiate the frequency division ratios by using the wireless communication unit, and the second clock circuit in the primary device and the second clock circuit in the secondary device perform frequency division on the communication clock signal by using a negotiated frequency division ratio. When the data that needs to be processed is audio data, optionally, when a sampling rate of played audio source data changes, the frequency division ratio may need to be renegotiated, to readjust audio system working frequencies of the primary device and the secondary device.

The second clock circuit 422 may be implemented in a plurality of possible manners. For example, the second clock circuit 422 may be implemented by using a circuit configured to implement a frequency division function. For example, the circuit configured to implement the frequency division function may include a frequency divider, a phase-locked loop circuit, and the like. This is not limited in this embodiment of this application.

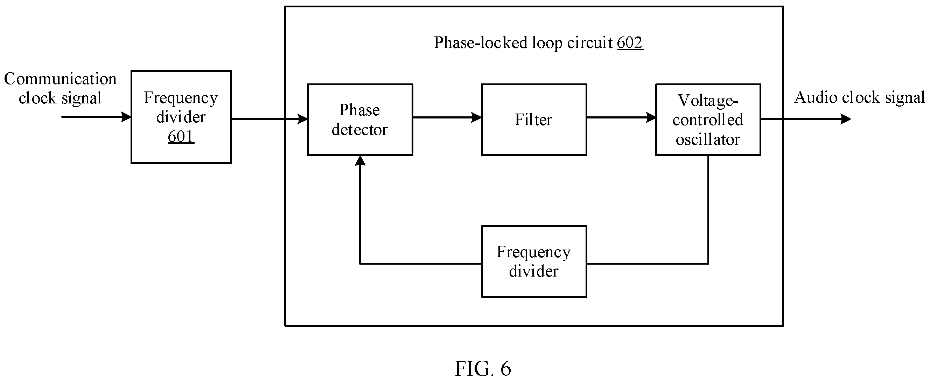

For example, the second clock circuit 422 is implemented by using a phase-locked loop circuit. In a possible implementation, a circuit structure of the second clock circuit 422 may be the same as the phase-locked loop circuit structure shown in FIG. 5. A frequency division ratio of a frequency divider in the phase-locked loop circuit is set to 1:N (N is an integer greater than 1). An input signal of the phase-locked loop circuit is a communication clock signal, and an output signal is a data processing clock signal. In another possible implementation, a structure of the second clock circuit 422 may be shown in FIG. 6, and includes a frequency divider 601 and a phase-locked loop circuit 602. A structure of the phase-locked loop circuit 602 may be the same as the structure of the phase-locked loop circuit shown in FIG. 5. After a communication clock signal is input to the frequency divider 601, the frequency divider 601 performs pre-frequency division processing, to reduce a signal frequency to a capability range of the phase-locked loop circuit 602, and then outputs the signal to the phase-locked loop circuit 602. The phase-locked loop circuit 602 outputs a data processing clock signal. The second clock circuit shown in FIG. 6 is applicable to a case in which a frequency of the communication clock signal differs greatly from a frequency of the data processing clock signal.

The data processing clock signal is transmitted to the control module 430. The control module 430 may perform data processing based on the data processing clock signal. For example, if data that needs to be processed is a light effect control signal, the control module 430 may generate a light control signal based on the data processing clock signal and a light control strategy, and output the light control signal to a light control device, for example, a light switch device. The light control policy may indicate an on-off switching sequence of a light, on duration of the light, and off duration of the light, and may further indicate a light color. This is not limited in this embodiment of this application. Because the control module 430 generates the light control signal based on the data processing clock signal, and the data processing clock signals of the primary device and the secondary device have high synchronization precision, light control signals of the primary device and the secondary device also have high synchronization precision. This implements light effect synchronization between the primary device and the secondary device. The control module 430 may further control a data output based on the data processing clock signal. For example, if data that needs to be processed is audio data, the control module 430 may output the audio data to a loudspeaker based on the data processing clock signal, to play the audio data through the loudspeaker. Because the control module 430 outputs the audio data based on the data processing clock signal, and the data processing clock signals of the primary device and the secondary device have high synchronization precision, audio playing in the primary device and the secondary device also has high synchronization precision. This implements audio synchronization between the primary device and the secondary device.

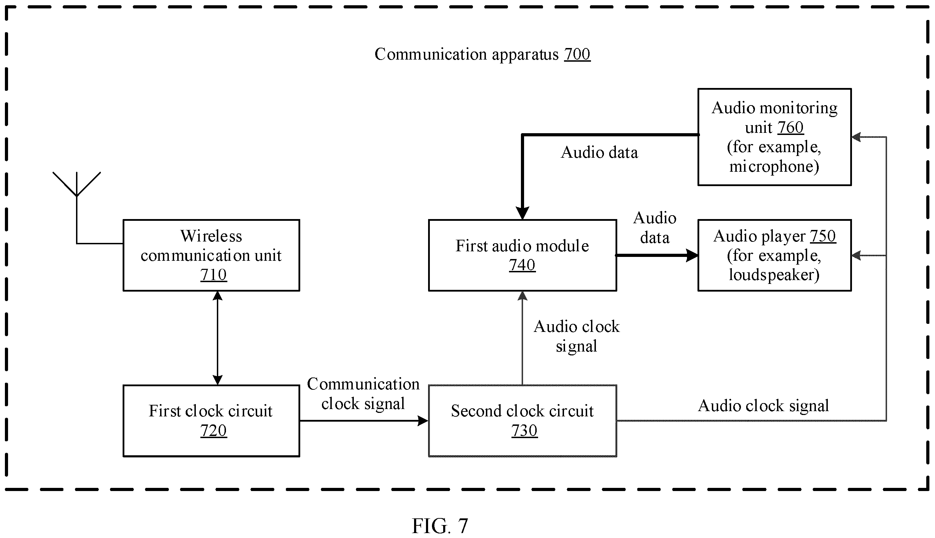

Based on the structure of the communication apparatus 400 shown in FIG. 4, FIG. 7 shows an example of a diagram of a structure of a communication apparatus 700 for implementing audio synchronization.

Structures and functions of a wireless communication unit 710, a first clock circuit 720, and a second clock circuit 730 in the communication apparatus 700 are basically the same as those of related components in the communication apparatus 400. Details are not described herein again. It may be understood that the first clock circuit 720 and the second clock circuit 730 may alternatively be implemented by using one clock circuit.

In the communication apparatus 700, an example in which data that needs to be processed is audio data is used. Therefore, for clarity, the data processing clock signal is referred to as an audio clock signal in the following example. Optionally, a frequency of the audio clock signal is the same as a frequency of the audio data, or a frequency of the audio clock signal is in an integer multiple relationship with a frequency of the audio data.

A function of a first audio module 740 in the communication apparatus 700 is basically the same as a function of the control module 430 in the communication apparatus 400. As shown in FIG. 7, the first audio module 740 may control, based on the audio clock signal, the audio data to be output to an audio player 750, for example, output the audio data to the audio player 750 at a rising edge of the audio clock signal. The audio player 750 may convert an electrical signal into a sound signal, to play the audio data. An example of the audio player 750 is a loudspeaker.

In another possible implementation, the communication apparatus 700 may further include a second audio module (not shown in the figure). When a first electronic device in which the communication apparatus 700 is located is a primary device or the communication apparatus 700 is a primary device, the second audio module in the primary device may receive and buffer audio data, encapsulate the buffered audio data into an audio data packet, transmit the audio data packet to the wireless communication unit 710, and send the audio data packet to a secondary device through the wireless communication unit 710. Alternatively, when a first electronic device in which the communication apparatus 700 is located is a secondary device or the communication apparatus 700 is a secondary device, the wireless communication unit 710 in the secondary device may send, to the second audio module, an audio data packet received from the primary device. The second audio module may decapsulate the audio data packet into audio data and buffer the audio data. The buffered audio data is sent to the first audio module 740, and then the first audio module 740 outputs the audio data to the audio player 750 for audio playing.

Optionally, when the primary device includes the first audio module and the second audio module, a sound channel to which audio data output by the first audio module to the audio player belongs may be the same as or different from a sound channel to which audio data sent by the second audio module to the secondary device through the wireless communication unit belongs. For example, audio data output by the first audio module in the primary device to a local audio player is 8-channel audio data, that is, the first audio module outputs the 8-channel audio data to an audio player in the device for playing, and audio data output by the second audio module is a group of 4-channel audio data in the 8-channel audio data, that is, the second audio module sends the 4-channel audio data to the secondary device through the wireless communication unit.

In a possible implementation, the communication apparatus 700 may further include an audio monitoring unit 760, and the second clock circuit 730 may further send the audio clock signal to the audio monitoring unit 760. An example of the audio monitoring unit 760 is a microphone. The audio monitoring unit 760 may collect audio data. The audio monitoring unit 760 may convert a sound signal into an electrical signal (sound data), and may transmit the sound data to the first audio module 740 based on the audio clock signal, for example, output the collected audio data to the first audio module 740 at a rising edge of the audio clock signal. In a possible scenario, an audio monitoring unit in the primary device may receive audio data played by the secondary device. That is, the primary device may collect the audio data of the secondary device, analyze the collected audio data, and perform, based on an analysis result, processing such as noise reduction on audio data to be played by the primary device and/or to be transmitted to the secondary device, to improve sound quality.

There may be more players and more audio monitoring units in the communication apparatus 700. This is not limited in this embodiment of this application.

The communication apparatus 700 is used in the primary device and the secondary device. Communication clock synchronization may be implemented between the primary device and the secondary device, that is, high-precision frequency synchronization and phase synchronization of the communication clock signals of the primary device and the secondary device may be implemented. In this way, the audio clock signals generated by the primary device and the secondary device based on the communication clock signals may also be synchronized. Therefore, the primary device and the secondary device use the audio clock signals for audio data processing (for example, audio data playing). In this way, audio playing of the primary device and the secondary device is synchronous.

For example, in some scenarios, synchronization of the communication clock signals of the primary device and the secondary device at a microsecond level may be implemented (for example, when a TSF mechanism is used), and correspondingly, synchronization, at a microsecond level, of the audio clock signals generated by the primary device and the secondary device based on the communication clock signals may also be implemented, so that synchronization of audio playing of the primary device and the secondary device at a microsecond level may be implemented. This implements high-precision audio synchronization between the primary device and the secondary device.

The communication apparatus 400 and the communication apparatus 700 provide a solution for implementing audio synchronization through hardware. Compared with that in a related technology in which audio synchronization is performed by estimating audio clock deviation between devices through software, in this embodiment of this application, a hardware circuit can be used to avoid a problem that software estimation precision cannot reach a small time granularity (for example, cannot reach a microsecond level) and a problem that a small granularity time unit (for example, a microsecond level) cannot be reached due to a limitation of an adjustment granularity and an adjustment periodicity by using a specific software implementation method in a related technology. Therefore, deviation and fluctuation of data processing synchronization can be reduced.

Although the communication apparatus 400 shown in FIG. 4 and the communication apparatus 700 shown in FIG. 7 provide a solution for implementing audio synchronization through hardware, a structure and an implementation of the communication apparatus that can implement the foregoing functions are not limited in embodiments of this application. For example, the communication apparatus that can implement the foregoing functions may be implemented through a combination of hardware and software, or may be implemented through software that can support an implementation mechanism of embodiments of this application.

The electronic device (including the first electronic device and the second electronic device) usually includes a main control system circuit module (also referred to as a system board or a main chip) and a wireless communication circuit module (also referred to as a wireless module or a wireless communication chip). Based on the electronic device including the main control system circuit module and the wireless communication circuit module, components in the communication apparatus 700 may be distributed in the main control system circuit module and the wireless communication circuit module, or may be distributed only in the wireless communication circuit module. The following uses several examples to describe distribution of the components in the communication apparatus 700 on the main control system circuit module and the wireless communication circuit module in the electronic device.

### Example 1

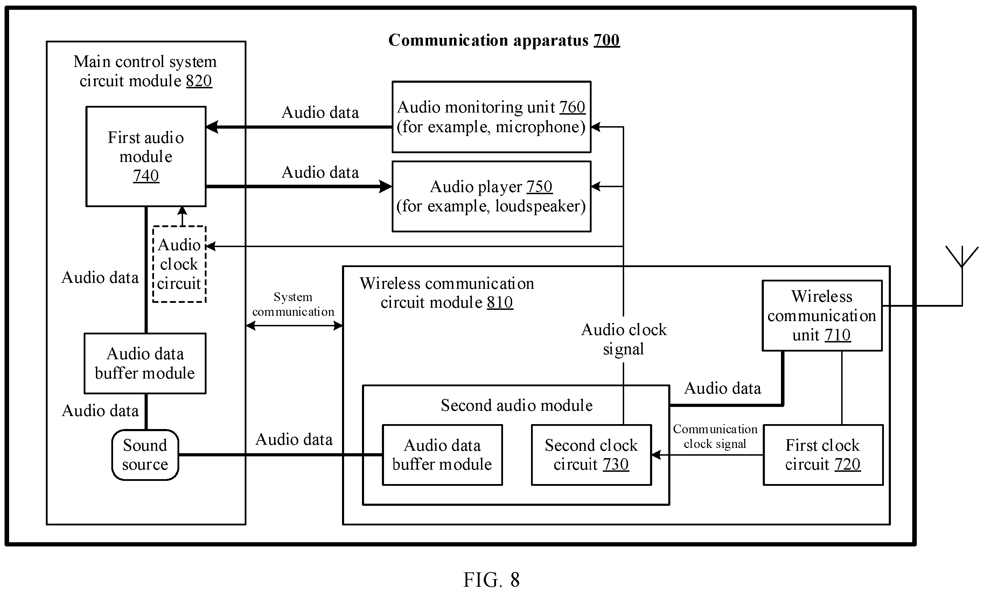

As shown in FIG. 8, the wireless communication unit 710, the first clock circuit 720, the second clock circuit 730, and the second audio module in the communication apparatus 700 are disposed in a wireless communication circuit module 810, and the first audio module 740 is disposed in a main control system circuit module 820.

Optionally, system communication may be performed between the main control system circuit module 820 and the wireless communication circuit module 810, to exchange necessary control information and data.

Optionally, the communication apparatus may further include an audio data buffer module configured to buffer audio data. There may be a plurality of audio data buffer modules. For example, the main control system circuit module 820 includes an audio data buffer module, and the first audio module may obtain audio data from the audio data buffer module. For another example, the wireless communication circuit module 810 includes an audio data buffer module. For the primary device, the audio data buffer module may buffer audio data from the main control system circuit module, to send the audio data to the secondary device through the wireless communication unit. For the secondary device, the audio data buffer module may buffer audio data received from the primary device, to send the audio data to the main control system circuit module.

Optionally, the main control system circuit module 820 may further include an audio clock circuit. The audio clock may include two states: a primary state and a secondary state, and the audio clock circuit works in one of the two states. If the audio clock circuit is set to be in the primary state, the audio clock circuit may generate an audio clock signal, and provide the audio clock signal to components related to audio processing such as the first audio module 740, the audio player 750, and the audio monitoring unit 760. If the audio clock circuit is set to be in the secondary state, the audio clock circuit is prohibited from generating an audio clock signal, and the audio clock circuit may forward an audio clock signal received from the second clock circuit 730. In this embodiment of this application, the audio clock circuit may be set to be in the secondary state. In this way, the audio clock circuit may forward the received audio clock signal to the first audio module 740.

In the structure shown in Example 1, audio clock signals of the audio player (for example, a loudspeaker) and the audio monitoring unit (for example, a microphone) are mounted on the wireless communication circuit module, that is, the audio clock signal is provided by the second clock circuit in the wireless communication circuit module, and the audio data signal is mounted on the first audio module in the main control system circuit module. This structure is applicable to a case in which the main control system circuit module supports an external audio clock input. Generally, the main control system circuit module has a high processing capability and performance. Therefore, when the audio data is received and sent by the main control system circuit module, the capability and performance of the main control system circuit module can be fully utilized.

### Example 2

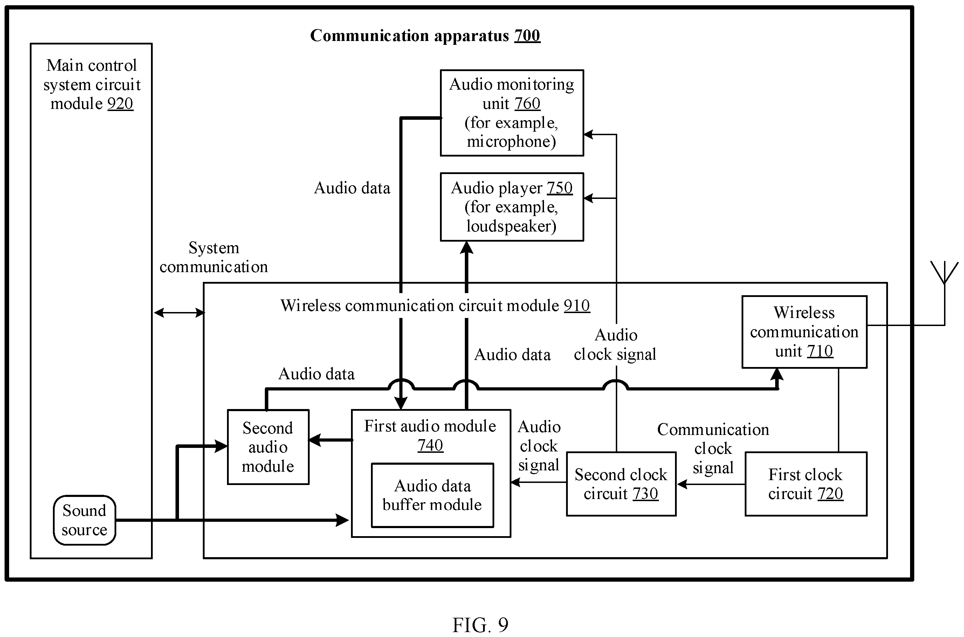

As shown in FIG. 9, the wireless communication unit 710, the first clock circuit 720, the second clock circuit 730, the first audio module 740, and the second audio module in the communication apparatus 700 are disposed in a wireless communication circuit module 910.

Optionally, system communication may be performed between the main control system circuit module 920 and the wireless communication circuit module 910, to exchange necessary control information and data.

Optionally, the communication apparatus may further include an audio data buffer module configured to buffer audio data. For example, the wireless communication circuit module 910 includes an audio data buffer module. For the primary device, the audio data buffer module may buffer audio data from the main control system circuit module, so that the first audio module provides the audio data to the second audio module, and the second audio module sends the audio data to the secondary device through the wireless communication unit. The first audio module further outputs the audio data to an audio player for playing. For the secondary device, the audio data buffer module may buffer audio data received from the primary device, so that the first audio module sends the audio data to the audio player for playing.

In the structure shown in Example 2, audio clock signals of the audio player (for example, a loudspeaker) and an audio monitoring unit (for example, a microphone) are mounted on the wireless communication circuit module, and the second clock circuit in the wireless communication circuit module provides the audio clock signals for the audio player (for example, the loudspeaker) and the audio monitoring unit (for example, the microphone). The audio data signals of the audio player (for example, the loudspeaker) and the audio monitoring unit (for example, the microphone) are also mounted on the wireless communication circuit module. For example, in the primary device, a sound source is provided by the main control system circuit module, audio data is provided to the first audio module in the wireless communication circuit module, and the audio data is buffered by the audio data buffer module in the first audio module and then provided to the loudspeaker for playing. In the secondary device, after receiving audio data from the primary device, the secondary device does not need to transmit the audio data to the main control system circuit module, and may transmit the audio data to the audio data buffer module in the wireless communication circuit module. After the audio data is buffered by the audio data buffer module in the first audio module, the audio data is provided to the loudspeaker for playing. The structure may not depend on a capability of the main control system circuit module to transmit the audio clock signal and the audio data, and is applicable to a case in which the main control system circuit module does not support an external audio clock input.

### Example 3

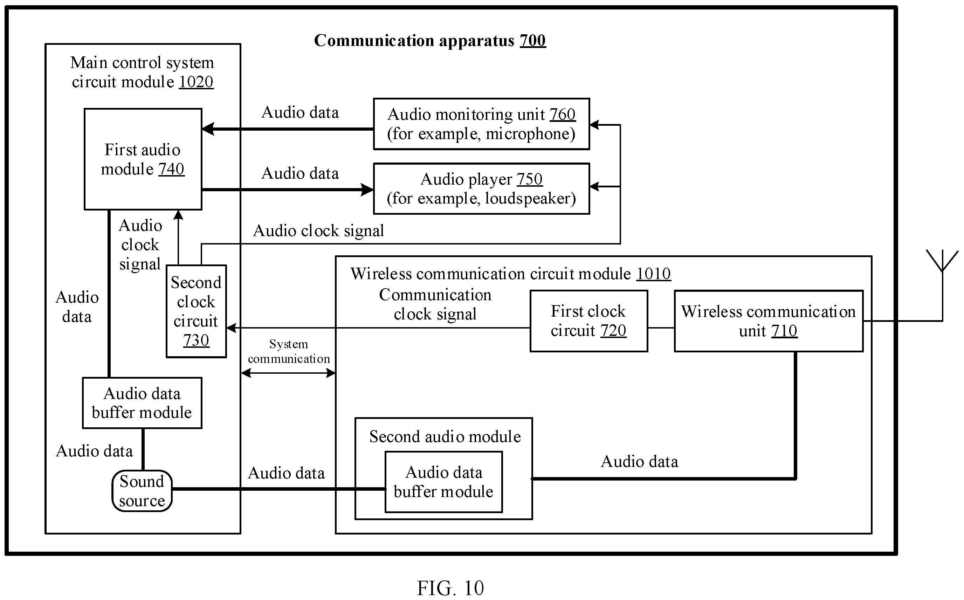

As shown in FIG. 10, the wireless communication unit 710, the first clock circuit 720, and the second audio module in the communication apparatus 700 are disposed in a wireless communication circuit module 1010, and the first audio module 740 and the second clock circuit 730 are disposed in a main control system circuit module 1020.

Optionally, system communication may be performed between the main control system circuit module 1020 and the wireless communication circuit module 1010, to exchange necessary control information and data.

Optionally, the communication apparatus may further include an audio data buffer module configured to buffer audio data. There may be a plurality of audio data buffer modules. For example, the main control system circuit module 1020 includes an audio data buffer module, and the first audio module may obtain audio data from the audio data buffer module. For another example, the wireless communication circuit module 1010 includes an audio data buffer module. For the primary device, the audio data buffer module may buffer audio data from the main control system circuit module, to send the audio data to the secondary device through the wireless communication unit. For the secondary device, the audio data buffer module may buffer audio data received from the primary device, to send the audio data to the main control system circuit module.

In the structure shown in Example 3, audio clock signals of an audio player (for example, a loudspeaker) and an audio monitoring unit (for example, a microphone) are mounted on the main control system circuit module, that is, an audio clock signal is provided by the second clock circuit in the main control system circuit module, and the audio data signal is mounted on the first audio module in the main control system circuit module. The structure is applicable to a case in which the main control system circuit module has a capability of inputting an external reference clock and regenerating an audio system clock, and can make full use of the capability and performance of the main control system circuit module.

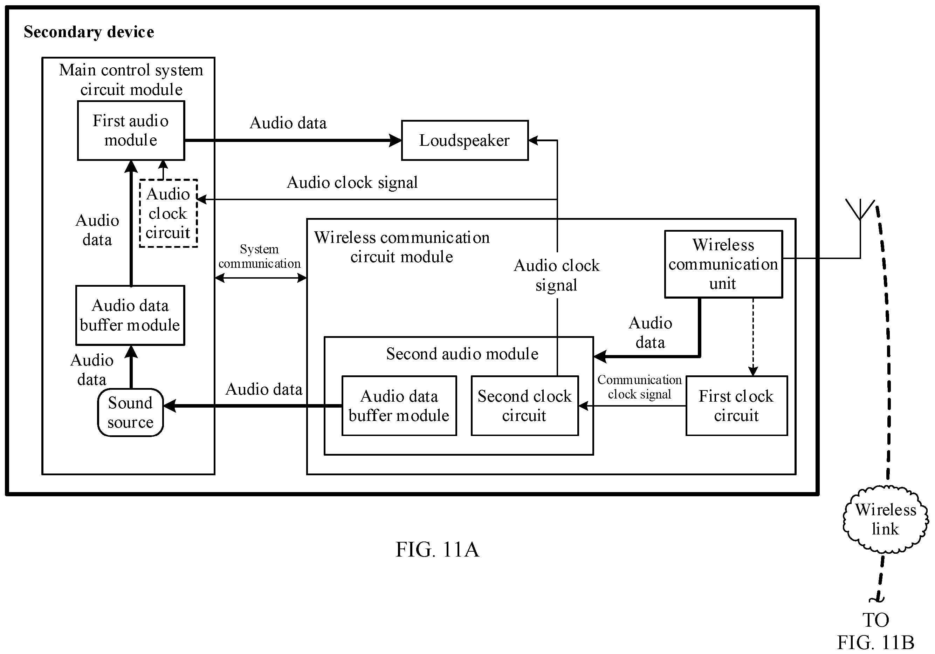

The following uses an audio synchronization application scenario as an example to describe, with reference to FIG. 11A and FIG. 11B, FIG. 12A and FIG. 12B, and FIG. 13A and FIG. 13B, an architecture of a communication system for implementing audio synchronization.

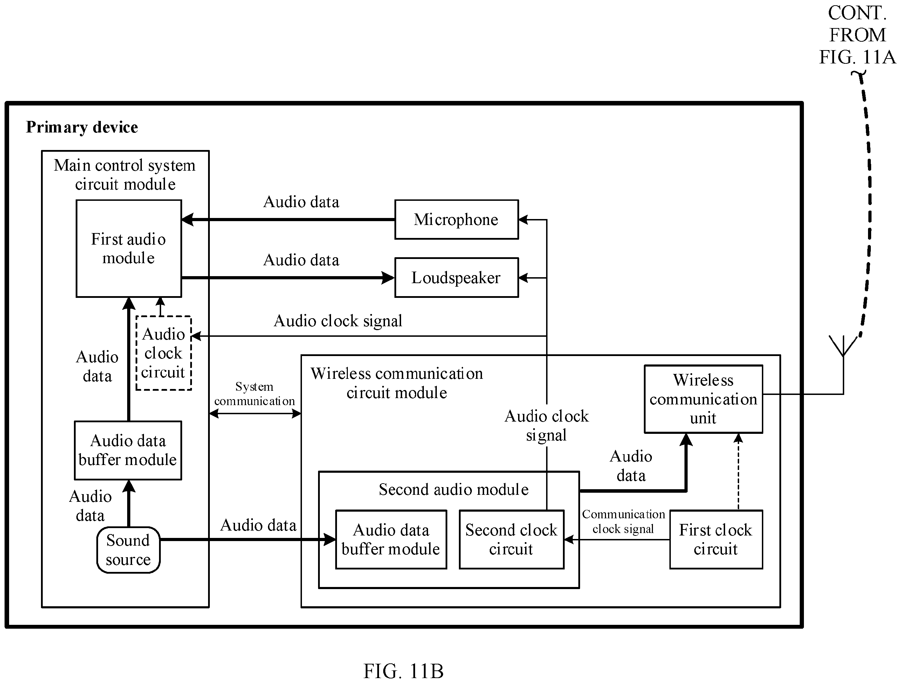

As shown in FIG. 11A and FIG. 11B, a communication system includes a primary device and a secondary device. The primary device and the secondary device are networked to implement a multi-channel stereo scenario. An example of a networking form of the primary device and the secondary device may be shown in FIG. 1 or FIG. 2A and FIG. 2B.

Structures of the primary device and the secondary device are basically the same as the structures shown in FIG. 8.

The following describes an example of a process in which the primary device and the secondary device implement audio synchronization. For implementations and functions of related components in the primary device and the secondary device, refer to the foregoing embodiments.

On a primary device side, the first clock circuit in the wireless communication circuit module may generate a communication clock signal in the primary device based on a reference clock signal, and the communication clock signal is input to the second clock circuit. The second clock circuit outputs an audio clock signal based on the input communication clock signal. The audio clock signal is transmitted to the first audio module in the main control system circuit module, and the first audio module obtains audio data from the audio data buffer module in the main control system circuit module, and outputs the audio data to the loudspeaker based on the audio clock signal. The main control system circuit module further sends the audio data to the wireless communication circuit module, and the audio data is buffered in the audio data buffer module in the wireless communication circuit module. The second audio module obtains the audio data in the audio data buffer module, and sends the audio data to the secondary device through the wireless communication unit. The wireless communication unit further sends a signal used for synchronization of a communication clock signal to the secondary device, where the signal is correlated with the communication clock signal of the primary device.

Optionally, a sound channel to which the audio data sent by the first audio module to the loudspeaker belongs may be the same as or different from a sound channel to which the audio data sent by the second audio module to the secondary device through the wireless communication unit belongs. For example, the audio data sent by the first audio module to the loudspeaker is 8-channel audio data, and the audio data sent by the second audio module to the secondary device through the wireless communication unit is a group of 4-channel audio data in the 8-channel audio data. Another group of 4-channel audio data may be sent to another secondary device, so that surround stereo effect may be formed.

On a secondary device side, the wireless communication unit in the wireless communication circuit module receives audio data sent by the primary device, where the audio data is buffered in the audio data buffer module in the wireless communication circuit module. The wireless communication circuit module sends the audio data in the audio data buffer module of the wireless communication circuit module to the main control system circuit module, where the audio data is buffered in the audio data buffer module in the main control system circuit module. After receiving the signal used for synchronization of a communication clock signal, the wireless communication unit in the wireless communication circuit module may generate a reference clock signal based on the signal and output the reference clock signal to the first clock circuit. For example, when the signal used for synchronization of a communication clock signal is a time synchronization frame, the wireless communication unit parses the time synchronization frame to obtain a timestamp included in the time synchronization frame, and generates a reference clock signal based on the timestamp. For another example, when the signal used for synchronization of a communication clock signal is a clock synchronization signal, the wireless communication unit may output a detected clock synchronization signal as a reference signal to the first clock circuit. The first clock circuit may generate a communication clock signal in the secondary device based on the reference clock signal, and the communication clock signal is input to the second clock circuit. The second clock circuit outputs an audio clock signal based on the input communication clock signal. The audio clock signal is transmitted to the first audio module in the main control system circuit module, and the first audio module obtains audio data from the audio data buffer module in the main control system circuit module, and outputs the audio data to the loudspeaker based on the audio clock signal.

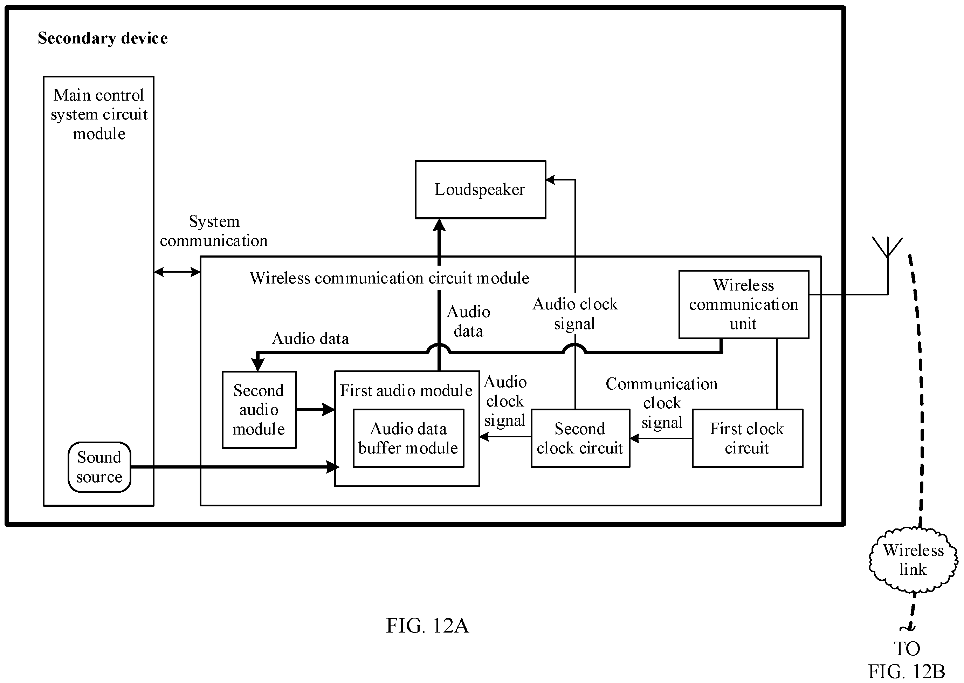

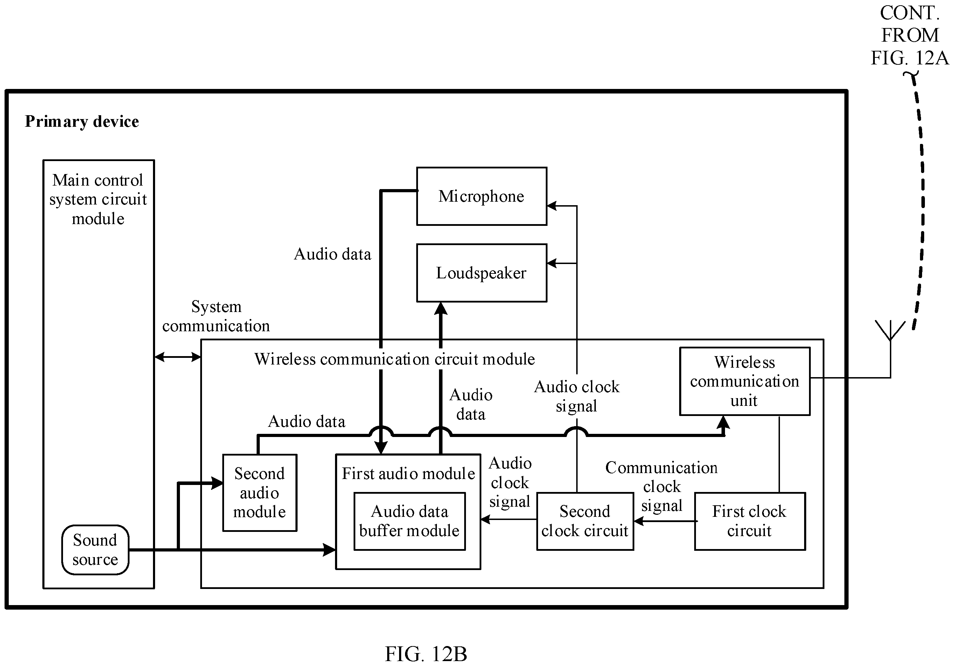

As shown in FIG. 12A and FIG. 12B, a communication system includes a primary device and a secondary device. The primary device and the secondary device are networked to implement a multi-channel stereo scenario. An example of a networking form of the primary device and the secondary device may be shown in FIG. 1 or FIG. 2A and FIG. 2B.

Structures of the primary device and the secondary device are basically the same as the structures shown in FIG. 9.

The following describes an example of a process in which the primary device and the secondary device implement audio synchronization. For implementations and functions of related components in the primary device and the secondary device, refer to the foregoing embodiments.

On a primary device side, the first clock circuit in the wireless communication circuit module may generate a communication clock signal in the primary device based on a reference clock signal, and the communication clock signal is input to the second clock circuit. The second clock circuit outputs an audio clock signal based on the input communication clock signal. The audio clock signal is transmitted to the first audio module in the wireless communication circuit module, and the first audio module obtains audio data from the audio data buffer module in the wireless communication circuit module, and outputs the audio data to the loudspeaker based on the audio clock signal. The second audio module obtains the audio data in the audio data buffer module, and sends the audio data to the secondary device through the wireless communication unit. The wireless communication unit further sends a signal used for synchronization of a communication clock signal to the secondary device, where the signal is correlated with the communication clock signal of the primary device.

Optionally, a sound channel to which the audio data sent by the first audio module to the loudspeaker belongs may be the same as or different from a sound channel to which the audio data sent by the second audio module to the secondary device through the wireless communication unit belongs. For example, the audio data sent by the first audio module to the loudspeaker is 8-channel audio data, and the audio data sent by the second audio module to the secondary device through the wireless communication unit is a group of 4-channel audio data in the 8-channel audio data. Another group of 4-channel audio data may be sent to another secondary device, so that surround stereo effect may be formed.

On a secondary device side, the wireless communication unit in the wireless communication circuit module receives audio data sent by the primary device, where the audio data is buffered in the audio data buffer module in the wireless communication circuit module. After receiving the signal used for synchronization of a communication clock signal, the wireless communication unit may generate a reference clock signal based on the signal and output the reference clock signal to the first clock circuit. For example, when the signal used for synchronization of a communication clock signal is a time synchronization frame, the wireless communication unit parses the time synchronization frame to obtain a timestamp included in the time synchronization frame, and generates a reference clock signal based on the timestamp. For another example, when the signal used for synchronization of a communication clock signal is a clock synchronization signal, the wireless communication unit may output a detected clock synchronization signal as a reference signal to the first clock circuit. The first clock circuit may generate a communication clock signal in the secondary device based on the reference clock signal, and the communication clock signal is input to the second clock circuit. The second clock circuit outputs an audio clock signal based on the input communication clock signal. The audio clock signal is transmitted to the first audio module. The second audio module receives the audio data from the wireless communication unit and buffers the audio data. The first audio module obtains the buffered audio data, and outputs the audio data to the loudspeaker based on the audio clock signal.

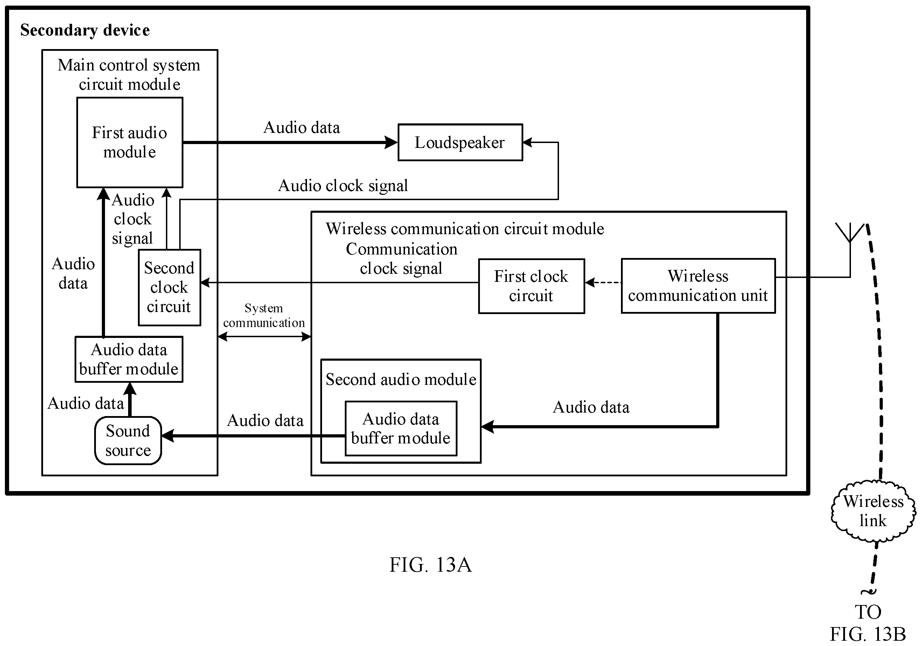

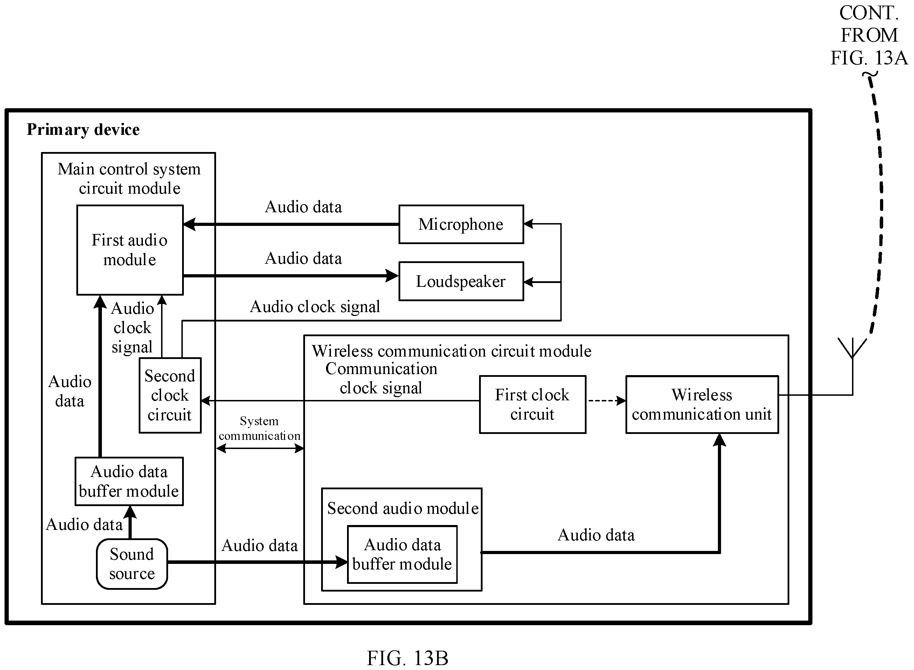

As shown in FIG. 13A and FIG. 13B, a communication system includes a primary device and a secondary device. The primary device and the secondary device are networked to implement a multi-channel stereo scenario. An example of a networking form of the primary device and the secondary device may be shown in FIG. 1 or FIG. 2A and FIG. 2B.

Structures of the primary device and the secondary device are basically the same as the structures shown in FIG. 10.

The following describes an example of a process in which the primary device and the secondary device implement audio synchronization. For implementations and functions of related components in the primary device and the secondary device, refer to the foregoing embodiments.

On a primary device side, the first clock circuit in the wireless communication circuit module may generate a communication clock signal in the primary device based on a reference clock signal, and the communication clock signal is input to the second clock circuit in the main control system circuit module. The second clock circuit outputs an audio clock signal based on the input communication clock signal. The audio clock signal is transmitted to the first audio module in the main control system circuit module, and the first audio module obtains audio data from the audio data buffer module in the main control system circuit module, and outputs the audio data to the loudspeaker based on the audio clock signal. The main control system circuit module further sends the audio data to the wireless communication circuit module, and the audio data buffer module in the wireless communication circuit module buffers the audio data. The second audio module obtains the audio data in the audio data buffer module, and sends the audio data to the secondary device through the wireless communication unit. The wireless communication unit further sends a signal used for synchronization of a communication clock signal to the secondary device, where the signal is correlated with the communication clock signal of the primary device.

Optionally, a sound channel to which the audio data sent by the first audio module to the loudspeaker belongs may be the same as or different from a sound channel to which the audio data sent by the second audio module to the secondary device through the wireless communication unit belongs. For example, the audio data sent by the first audio module to the loudspeaker is 8-channel audio data, and the audio data sent by the second audio module to the secondary device through the wireless communication unit is a group of 4-channel audio data in the 8-channel audio data. Another group of 4-channel audio data may be sent to another secondary device, so that surround stereo effect may be formed.

On a secondary device side, the wireless communication unit in the wireless communication circuit module receives audio data sent by the primary device, where the audio data is buffered in the audio data buffer module in the wireless communication circuit module. The wireless communication circuit module sends the audio data in the audio data buffer module of the wireless communication circuit module to the main control system circuit module, where the audio data is buffered in the audio data buffer module in the main control system circuit module. After receiving the signal used for synchronization of a communication clock signal, the wireless communication unit in the wireless communication circuit module may generate a reference clock signal based on the signal and output the reference clock signal to the first clock circuit. For example, when the signal used for synchronization of a communication clock signal is a time synchronization frame, the wireless communication unit parses the time synchronization frame to obtain a timestamp included in the time synchronization frame, and generates a reference clock signal based on the timestamp. For another example, when the signal used for synchronization of a communication clock signal is a clock synchronization signal, the wireless communication unit may output a detected clock synchronization signal as a reference signal to the first clock circuit. The first clock circuit may generate a communication clock signal in the secondary device based on the reference clock signal, and the communication clock signal is input to the second clock circuit in the main control system circuit module. The second clock circuit outputs an audio clock signal based on the input communication clock signal. The audio clock signal is transmitted to the first audio module in the main control system circuit module, and the first audio module obtains audio data from the audio data buffer module in the main control system circuit module, and outputs the audio data to the loudspeaker based on the audio clock signal.

It may be understood that, in the communication systems shown in FIG. 11A and FIG. 11B, FIG. 12A and FIG. 12B, and FIG. 13A and FIG. 13B each have only one secondary device as an example. In an actual application scenario, there may be a plurality of secondary devices. If there are a plurality of secondary devices, for a function of each secondary device and information and data exchanged between each secondary device and the primary device, refer to the foregoing system. A quantity of secondary devices is not limited in embodiments of this application.

It may be understood that the communication systems shown in FIG. 11A and FIG. 11B, FIG. 12A and FIG. 12B, and FIG. 13A and FIG. 13B are described by using examples in which structures of the primary device and the secondary device are basically the same. In some other embodiments, the primary device and the secondary device may also have different structures. For example, a structure of the primary device in a networking may be the same as the structure of the primary device in FIG. 8, and a structure of the secondary device in the networking may be the same as the structure of the secondary device in FIG. 10. This is not limited in this application.

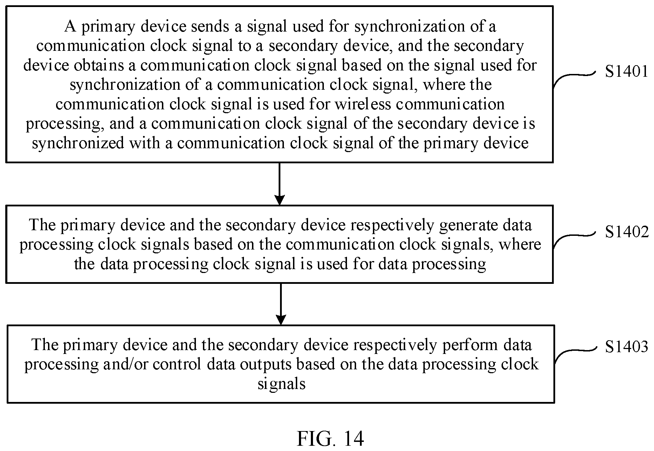

According to the architecture of the communication system and the structure of the electronic device provided in the foregoing embodiments, FIG. 14 shows an example of a flowchart block diagram of a method implemented based on the foregoing electronic device.

As shown in the figure, a procedure may include the following steps.

Step 1401: A primary device sends a signal used for synchronization of a communication clock signal to a secondary device, and the secondary device obtains a communication clock signal based on the signal used for synchronization of a communication clock signal, where the communication clock signal is used for wireless communication processing, and a communication clock signal of the secondary device is synchronized with a communication clock signal of the primary device.

Step 1402: The primary device and the secondary device respectively generate data processing clock signals based on the communication clock signals, where the data processing clock signal is used for data processing.

Step 1403: The primary device and the secondary device respectively perform data processing and/or control data outputs based on the data processing clock signals.

It may be understood that the primary device or the secondary device in the foregoing procedure may have the structure shown in FIG. 4, FIG. 7, FIG. 8, FIG. 9, or FIG. 10.

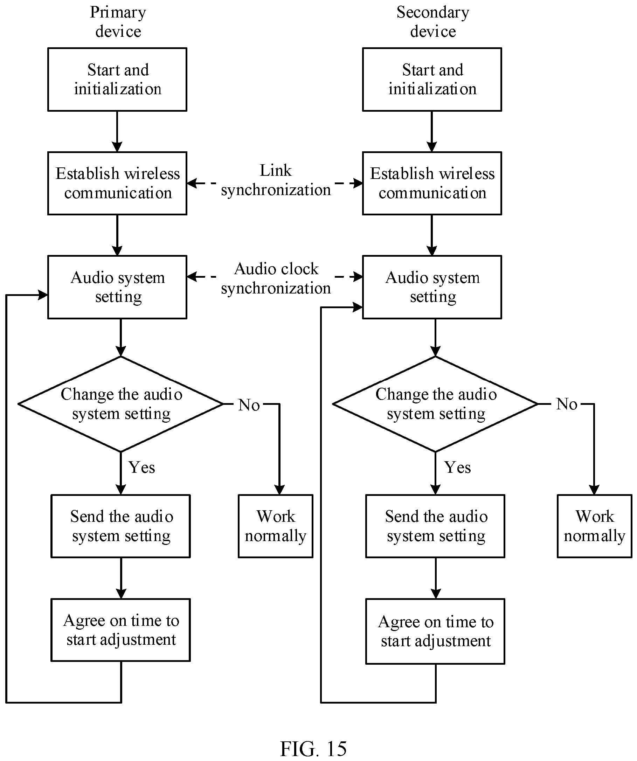

According to the structure of the electronic device provided in the foregoing embodiment, audio data is used as an example. FIG. 15 shows an example of a schematic flowchart of implementing audio synchronization between a primary device and a secondary device.

On a primary device side, after being started, the device performs initialization, establishes a wireless communication link (for example, a Wi-Fi communication link) with the secondary device, and then maintains synchronization of the wireless communication link with the secondary device, that is, maintains synchronization of communication clock signals, for example, maintains synchronization of the wireless communication link through a TSF mechanism. The primary device performs audio system setting, for example, including configuring parameters such as an audio frequency. If an audio system configuration parameter is not changed in a subsequent working process, the primary device performs related processing and playing of audio data based on the audio system configuration parameter and the audio clock signal generated based on the communication clock signal. If the audio system configuration parameter needs to be changed in the subsequent working process, the primary device sends an updated audio system configuration parameter to the secondary device, and starts the updated audio system configuration parameter at the same time agreed with the secondary device.

On a secondary device side, after being started, the device performs initialization, establishes a wireless communication link (for example, a Wi-Fi communication link) with the primary device, and then maintains synchronization of the wireless communication link with the primary device, that is, maintains synchronization of communication clock signals. The secondary device performs audio system setting. If an audio system configuration parameter is not changed in a subsequent working process, the secondary device performs related processing and playing of audio data based on the audio system configuration parameter and the second clock signal generated based on the first clock signal. If the audio system configuration parameter needs to be changed in the subsequent working process, the secondary device sends an updated audio system configuration parameter to the primary device, and starts the updated audio system configuration parameter at the same time agreed with the primary device.

Based on a same concept as the foregoing method embodiments, an embodiment of this application further provides a computer-readable storage medium. The computer-readable storage medium stores program instructions (or referred to as a computer program or instructions). When the program instructions are executed by a processor, a computer is enabled to perform an operation performed by the primary device or the secondary device in any possible implementation of the foregoing method embodiments.

Based on a same concept as the foregoing method embodiments, this application further provides a computer program product, including program instructions. When the computer program product is invoked and executed by a computer, the computer may be enabled to implement an operation performed by the primary device or the secondary device in any one of the foregoing method embodiments and possible implementations of the method embodiments.

Based on a same concept as the foregoing method embodiments, this application further provides a chip or a chip system. The chip may include one or more processors. The one or more processors are coupled to a transceiver for implementing an operation performed by the primary device or the secondary device in any possible implementation of the foregoing method embodiments. The chip system may include the foregoing chip, and include components such as a memory and a communication interface.

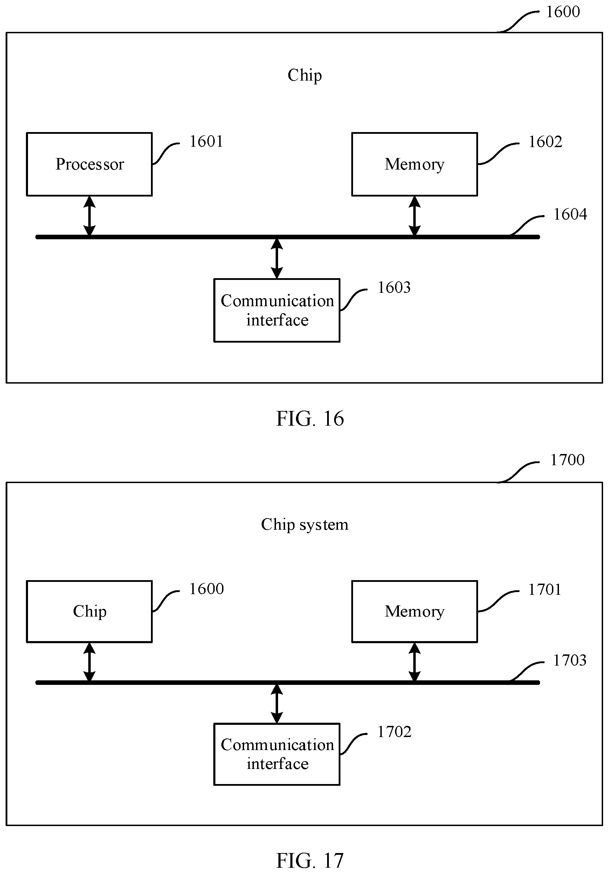

FIG. 16 shows a structure of a chip 1600 according to an embodiment of this application. The chip 1600 includes one or more processors 1601. Further, a memory 1602 may be included. Further, a communication interface 1603 may be included. The foregoing components may be coupled through one or more communication buses 1604.

The memory 1602 stores one or more computer programs (code), and the one or more computer programs include computer instructions. The one or more processors 1601 invoke the computer instructions stored in the memory 1602, so that an electronic device in which the processor 1601 is located performs the communication method provided in embodiments of this application.

During specific implementation, the memory 1602 may include a high-speed random access memory, and may also include a nonvolatile memory, for example, one or more magnetic disk storage devices, a flash memory device, or another nonvolatile solid-state storage device.

The one or more processors 1601 may be a general-purpose central processing unit (central processing unit, CPU), a microprocessor, an application-specific integrated circuit (application-specific integrated circuit, ASIC), or one or more integrated circuits configured to control program execution of the solutions of this application.

FIG. 16 is merely an implementation of the chip provided in this embodiment of this application. In actual application, the chip 1600 may further include more or fewer components. This is not limited herein.

FIG. 17 shows a structure of a chip system 1700 according to an embodiment of this application. The chip system 1700 includes one or more chips 1600 and a memory 1701. Further, a communication interface 1702 may be included. The foregoing components may be coupled through one or more communication buses 1703.

The memory 1701 stores one or more computer programs (code), and the one or more computer programs include computer instructions. The one or more chips 1600 may invoke the computer instructions stored in the memory 1701, so that an electronic device in which the chip 1600 is located performs the communication method provided in embodiments of this application. Alternatively, the memory 1701 may be configured to store data required in a process of performing the communication method provided in embodiments of this application, or intermediate data generated in a process of performing the communication method.

The memory 1701 may include a high-speed random access memory, and may also include a nonvolatile memory, for example, one or more magnetic disk storage devices, a flash memory device, or another nonvolatile solid-state storage device.

FIG. 17 is merely an implementation of the chip system provided in this embodiment of this application. In actual application, the chip system may further include more or fewer components. This is not limited herein.

A person skilled in the art should understand that embodiments of this application may be provided as methods, systems, or computer program products. Therefore, this application may be in a form of a hardware-only embodiment, a software-only embodiment, or an embodiment combining software and hardware aspects. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the scope of this application. Thus, this application is intended to cover such modifications and variations to this application, provided that the modifications and variations fall within the scope of the claims of this application and their equivalent technologies.

## Claims

1. A communication apparatus, used in a first electronic device in a communication system, wherein the communication system comprises one primary device and at least one secondary device, the first device is the primary device or a secondary device in the communication system, and the communication apparatus comprises:
a wireless communication unit, configured to send or receive a signal used for synchronization of a communication clock signal, wherein when the first electronic device is the primary device, the wireless communication unit is configured to send the signal used for synchronization of a communication clock signal, or when the first electronic device is a secondary device, the wireless communication unit is configured to receive the signal used for synchronization of a communication clock signal;
a clock circuit, configured to generate a data processing clock signal based on a communication clock signal, wherein the communication clock signal is used for wireless communication processing, and the data processing clock signal is used for data processing, wherein a communication clock signal of the first electronic device is synchronized with a communication clock signal of a second electronic device, and when the first electronic device is a secondary device, the communication clock signal of the first electronic device is obtained based on the received signal used for synchronization of a communication clock signal; and
a control module, configured to perform data processing and/or control a data output based on the data processing clock signal.

2. The communication apparatus according to claim 1, wherein the clock circuit comprises a first clock circuit and a second clock circuit, wherein
the first clock circuit is configured to: generate the communication clock signal, and send the communication clock signal to the second clock circuit; and
the second clock circuit is configured to generate the data processing clock signal based on the communication clock signal output by the first clock circuit.

3. The communication apparatus according to claim 2, wherein the second clock circuit is specifically configured to:
perform frequency division on the communication clock signal output by the first clock circuit, to obtain the data processing clock signal.

4. The communication apparatus according to claim 3, wherein the second clock circuit is a frequency divider or a phase-locked loop circuit.

5. The communication apparatus according to claim 3 or 4, wherein a frequency division ratio of the second clock circuit is preset; or
a frequency division ratio of the second clock circuit is obtained through negotiation between the first electronic device and the second electronic device.

6. The communication apparatus according to any one of claims 1 to 5, wherein the signal used for synchronization of a communication clock signal comprises:
a time synchronization frame that is periodically sent, wherein the time synchronization frame comprises a timestamp; or
a clock synchronization signal, wherein the clock synchronization signal is a periodic signal with a specified frequency, and a frequency and/or a phase of the clock synchronization signal are/is correlated with a communication clock signal of the primary device.

7. The communication apparatus according to any one of claims 1 to 6, wherein the data processing clock signal is an audio clock signal, and the output module is an audio player; and
the control module comprises:
a first audio module, configured to control, based on the audio clock signal, an audio data stream to be output to the audio player, wherein the audio player is configured to play the audio data stream.

8. The communication apparatus according to claim 7, further comprising a second audio module, wherein
when the first electronic device is the primary device, the second audio module is configured to: receive and buffer audio data, encapsulate the buffered audio data into an audio data packet, and transfer the audio data packet to the wireless communication unit, and the wireless communication unit is further configured to send the audio data packet from the second audio module to the second electronic device; or
when the first electronic device is a secondary device, the wireless communication unit is further configured to: receive an audio data packet from the second electronic device, and send the audio data packet to the second audio module, and the second audio module is configured to: decapsulate the audio data packet from the wireless communication unit into audio data and buffer the audio data, wherein the buffered audio data is sent to the first audio module.

9. The communication apparatus according to claim 8, wherein when the first electronic device is the primary device,
a sound channel to which audio data sent by the second audio module to the wireless communication unit belongs is the same as a sound channel to which audio data output by the first audio module to the audio player belongs; or
a sound channel to which audio data sent by the second audio module to the wireless communication unit belongs is a part of sound channels of a multi-channel audio output by the first audio module to the audio player.

10. The communication apparatus according to any one of claims 7 to 9, wherein the second clock module is further configured to:
output the audio clock signal to an audio monitoring unit, wherein the audio monitoring unit is configured to collect audio data based on the audio clock signal.

11. The communication apparatus according to any one of claims 1 to 6, wherein the control module is specifically configured to:
generate a light control signal based on the data processing clock signal and a light conversion strategy, and output the light control signal to a light control device.

12. The communication apparatus according to any one of claims 8 to 10, wherein the first electronic device comprises a wireless communication circuit module and a main control system circuit module;
the wireless communication unit, the first clock circuit, the second clock circuit, and the second audio module are disposed in the wireless communication circuit module; and
the first audio module is disposed in the main control system circuit module.

13. The communication apparatus according to any one of claims 8 to 10, wherein the first electronic device comprises a wireless communication circuit module; and
the wireless communication unit, the first clock circuit, the second clock circuit, the first audio module, and the second audio module are disposed in the wireless communication circuit module.

14. The communication apparatus according to any one of claims 8 to 10, wherein the first electronic device comprises a wireless communication circuit module and a main control system circuit module;
the wireless communication unit, the first clock circuit, and the second audio module are disposed in the wireless communication circuit module; and
the second clock circuit and the first audio module are disposed in the main control system circuit module.

15. An electronic device, comprising the communication apparatus according to any one of claims 1 to 14.

16. A communication system, comprising a primary device and at least one secondary device connected to the primary device, wherein
the primary device is configured to: send a signal used for synchronization of a communication clock signal to the secondary device; and generate a data processing clock signal based on the communication clock signal, and perform data processing and/or control a data output based on the data processing clock signal, wherein the data processing clock signal is used for data processing; and
the secondary device is configured to: obtain a communication clock signal based on the received signal used for synchronization of a communication clock signal, wherein the communication clock signal is used for wireless communication processing, and a communication clock signal of the secondary device is synchronized with a communication clock signal of the primary device; and generate a data processing clock signal based on the communication clock signal, and perform data processing and/or control a data output based on the data processing clock signal.

17. The communication system according to claim 16, wherein the primary device comprises:
a wireless communication unit, configured to send the signal used for synchronization of a communication clock signal to the secondary device;
a clock circuit, configured to generate the data processing clock signal based on the communication clock signal; and
a control module, configured to perform data processing and/or control the data output based on the data processing clock signal.

18. The communication system according to claim 17, wherein the clock circuit comprises:
a first clock circuit, configured to: generate the communication clock signal, and send the communication clock signal to a second clock circuit; and
the second clock circuit, configured to generate the data processing clock signal based on the communication clock signal output by the first clock circuit.

19. The communication system according to claim 17 or 18, wherein the data processing clock signal is an audio clock signal, and the primary device further comprises a first audio module; and
the first audio module is configured to control, based on the audio clock signal, audio data to be output to an audio player.

20. The communication system according to claim 19, wherein the primary device further comprises a second audio module; and
the second audio module is configured to: receive and buffer audio data, encapsulate the buffered audio data into an audio data packet, and transfer the audio data packet to the wireless communication unit, and the wireless communication unit is further configured to send the audio data packet from the second audio module to the second electronic device.

21. The communication system according to any one of claims 16 to 20, wherein the secondary device comprises:
a wireless communication unit, configured to receive the signal used for synchronization of a communication clock signal;
a clock circuit, configured to generate the data processing clock signal based on the communication clock signal; and
a control module, configured to perform data processing and/or control the data output based on the data processing clock signal.

22. The communication system according to claim 21, wherein the clock circuit comprises:
a first clock circuit, configured to: generate the communication clock signal based on the signal that is from the primary device and that is used for synchronization of a communication clock signal, and send the communication clock signal to a second clock circuit; and
the second clock circuit, configured to generate the data processing clock signal based on the communication clock signal output by the first clock circuit.

23. The communication system according to claim 21 or 22, wherein the data processing clock signal is an audio clock signal, and the secondary device further comprises a first audio module; and
the first audio module is configured to control, based on the audio clock signal, audio data to be output to an audio player.

24. The communication system according to claim 23, wherein the secondary device further comprises a second audio module;
the wireless communication unit is further configured to: receive an audio data packet from the second electronic device, and send the audio data packet to the second audio module; and
the second audio module is configured to: decapsulate the audio data packet from the wireless communication unit into audio data, and buffer the audio data, wherein the buffered audio data is sent to the first audio module.

25. A synchronization method, applied to a communication system, wherein the communication system comprises one primary device and at least one secondary device, and the method comprises:
sending, by the primary device, a signal used for synchronization of a communication clock signal to the secondary device, wherein the communication clock signal is used for wireless communication processing, and a communication clock signal of the secondary device is synchronized with a communication clock signal of the primary device;
respectively generating, by the primary device and the secondary device, data processing clock signals based on the communication clock signals, wherein the data processing clock signal is used for data processing; and
respectively performing, by the primary device and the secondary device, data processing and/or controlling data outputs based on the data processing clock signals.

26. A synchronization method, applied to a primary device in a communication system, wherein the method comprises:
sending a signal used for synchronization of a communication clock signal to a secondary device in the communication system, wherein the communication clock signal is used for wireless communication processing, a communication clock signal of the secondary device is synchronized with a communication clock signal of the primary device, and the communication clock signal of the secondary device is obtained based on the received signal used for synchronization of a communication clock signal;
generating a data processing clock signal based on the communication clock signal, wherein the data processing clock signal is used for data processing; and
performing data processing and/or controlling a data output based on the data processing clock signal.

27. A synchronization method, applied to a secondary device in a communication system, wherein the method comprises:
receiving a signal that is used for synchronization of a communication clock signal and that is sent by a primary device in the communication system, and generating a communication clock signal based on the signal used for synchronization of a communication clock signal, wherein the communication clock signal is used for wireless communication processing, and a communication clock signal of the secondary device is synchronized with a communication clock signal of the primary device;
generating a data processing clock signal based on the communication clock signal, wherein the data processing clock signal is used for data processing; and
performing data processing and/or controlling a data output based on the data processing clock signal.

28. A computer-readable storage medium, wherein the computer-readable storage medium comprises a computer program, and when the computer program is run on a computing device, the computing device is enabled to perform the method according to claim 26 or 27.

29. A chip system, wherein the chip system comprises at least one chip and a memory, and the at least one chip is coupled to the memory, and is configured to read and execute program instructions stored in the memory, to implement the method according to claim 26 or 27.

30. A computer program product, wherein when the computer program product is invoked by a computer, the computer is enabled to perform the method according to claim 26 or 27.
